# EUROPEAN PATENT APPLICATION

(11) **EP 3 893 568 A1**
(43) Date of publication of application: **13.10.2021**
(21) Application number: 20169100.3
(22) Date of filing: 09.04.2020
(51) Int. Cl.: H04W 68/02, H04W 72/04

(54) **USER EQUIPMENT AND BASE STATION INVOLVED IN PAGING**

(71) Applicant: Panasonic Intellectual Property Corporation of America, Torrance, CA 90503 (US)
(72) Inventor: LI, Hongchao, 63225 Langen (DE); SUZUKI, Hidetoshi, Osaka-shi,, Osaka 540-6207 (JP)
(74) Representative: Grünecker Patent- und Rechtsanwälte PartG mbB

(57) **Abstract**

The present disclosure relates to a user equipment (UE), comprising a receiver which receives configuration information to configure the UE to perform a paging function using a minimum slot time-domain scheduling restriction. The minimum slot time-domain scheduling restriction indicates a minimum amount of time slots between a received paging DCI and a corresponding paging message transmitted in the downlink as indicated by the received paging DCI. The receiver monitors a downlink control channel for a paging DCI transmitted from a base station that controls a radio cell in which the user equipment is located. The paging DCI indicates a slot time-domain scheduling parameter. A processor of the UE determines a time slot at which the corresponding paging message is transmitted by the base station, based on the indicated slot time-domain scheduling parameter. The receiver receives the corresponding paging message from the base station at the determined time slot.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for facilitating a UE to perform a paging function.

In an embodiment, the techniques disclosed here feature a user equipment comprising the following. A receiver of the UE receives configuration information to configure the UE to perform a paging function using a minimum slot time-domain scheduling restriction. The minimum slot time-domain scheduling restriction indicates a minimum amount of time slots between a received paging downlink control information, DCI, and a corresponding paging message transmitted in the downlink as indicated by the received paging DCI. The receiver monitors a downlink control channel for a paging DCI transmitted from a base station that controls a radio cell in which the user equipment is located. The paging DCI indicates a slot time-domain scheduling parameter. The UE further includes a processor which determines a time slot at which the corresponding paging message is transmitted by the base station, based on the indicated slot time-domain scheduling parameter. The receiver receives the corresponding paging message from the base station at the determined time slot.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: illustrates the RRC states and possible RRC state changes,
- **Fig. 7**: illustrates the relationship between different bandwidth parts, CORESETS, search spaces and PDCCH candidates;
- **Fig. 8**: illustrates an exemplary time-domain scheduling in 5G NR, with cross-slot indication of the DCI in slot n to a scheduled PDSCH in slot n+1, with corresponding start symbol and transmission duration,
- **Fig. 9**: illustrates the timing of a scheduling DCI and scheduled PDSCH and an effect of the minimum cross-slot time-domain scheduling concept,
- **Fig. 10**: illustrates an exemplary and simplified structure of a UE and gNB,
- **Fig. 11**: illustrates a structure of the UE according to an exemplary implementation of an improved paging procedure,
- **Fig. 12**: is a flow diagram for the UE behavior, according to an exemplary implementation of the improved paging procedure,
- **Fig. 13**: illustrates a structure of the base station according to an exemplary implementation of the improved paging procedure,
- **Fig. 14**: is a flow diagram for the base station behavior, according to an exemplary implementation of the improved paging procedure,
- **Fig. 15**: is a basic signaling diagram for an exemplary implementation of the improved paging procedure,
- **Fig. 16**: illustrates the timing of a scheduling paging DCI and scheduled paging message and an effect of the minimum cross-slot time-domain scheduling concept,
- **Fig. 17**: is a flow diagram for the UE behavior according to an exemplary implementation of the improved paging procedure.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE.

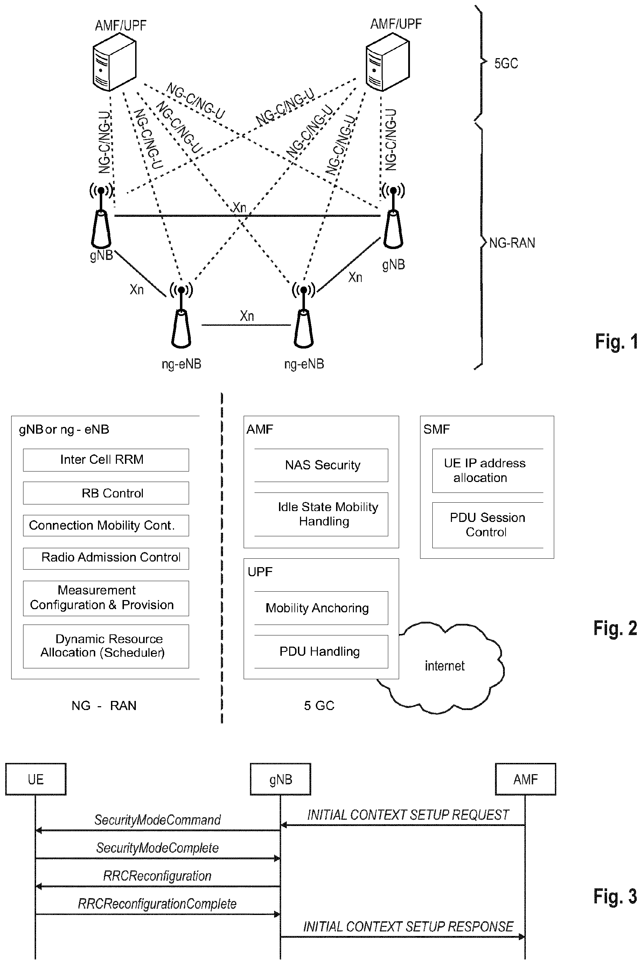

The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.0.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms).

Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.0.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

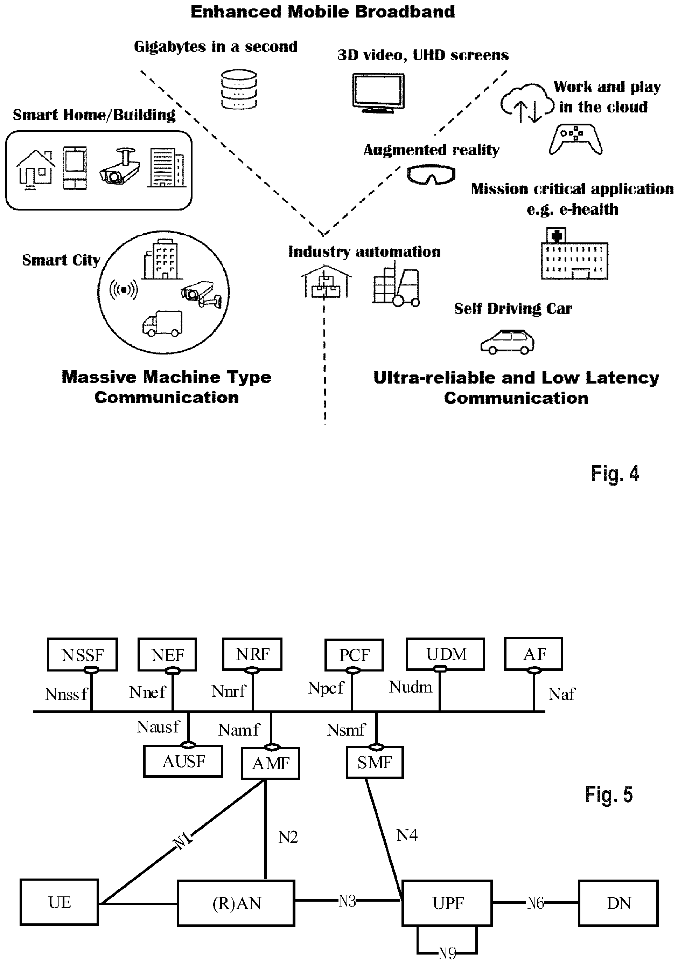

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 15.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.3.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### UE identifications

RNTI stands for Radio Network Temporary Identifier. For instance, an RNTI can used to differentiate and identify a UE in the radio cell. Further, an RNTI can also identify a specific radio channel, a group of UEs in case of paging, a group of UEs for which power control is issued by the eNB, system information transmitted for all the UEs by 5G gNB. 5G NR defines numerous different identifications for the UE, some of which are presented in the following table (see 3GPP TS 38.321 v15.8.0, section 7.1).

| **RNTI** | **Usage** | **Transport Channel** | **Logical Channel** |
|---|---|---|---|
| P-RNTI | Paging and System Information change notification | PCH | PCCH |
| SI-RNTI | Broadcast of System Information | DL-SCH | BCCH |
| RA-RNTI | Random Access Response | DL-SCH | N/A |
| Temporary C-RNTI | Contention Resolution (when no valid C-RNTI is available) | DL-SCH | CCCH, DCCH |
| Temporary C-RNTI | Msg3 transmission | UL-SCH | CCCH, DCCH, DTCH |
| C-RNTI, MCS-C-RNTI | Dynamically scheduled unicast transmission | UL-SCH | DCCH, DTCH |
| C-RNTI | Dynamically scheduled unicast transmission | DL-SCH | CCCH, DCCH, DTCH |
| MCS-C-RNTI | Dynamically scheduled unicast transmission | DL-SCH | DCCH, DTCH |
| C-RNTI | Triggering of PDCCH ordered random access | N/A | N/A |
| CS-RNTI | Configured scheduled unicast transmission (activation, reactivation and retransmission) | DL-SCH, UL-SCH | DCCH, DTCH |
| CS-RNTI | Configured scheduled unicast transmission (deactivation) | N/A | N/A |
| TPC-PUCCH-RNTI | PUCCH power control | N/A | N/A |
| TPC-PUSCH-RNTI | PUSCH power control | N/A | N/A |
| TPC-SRS-RNTI | SRS trigger and power control | N/A | N/A |
| INT-RNTI | Indication pre-emption in DL | N/A | N/A |
| SFI-RNTI | Slot Format Indication on the given cell | N/A | N/A |
| SP-CSI-RNTI | Activation of Semi-persistent CSI reporting on PUSCH | N/A | N/A |
| NOTE: The usage of MCS-C-RNTI is equivalent to that of C-RNTI in MAC procedures (except for the C-RNTI MAC CE). | | | |

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine may also be extended with an inactive state (see e.g. TS 38.331 v15.8.0, Figure 4.2.1-2), similar to the NR 5G as explained in the following.

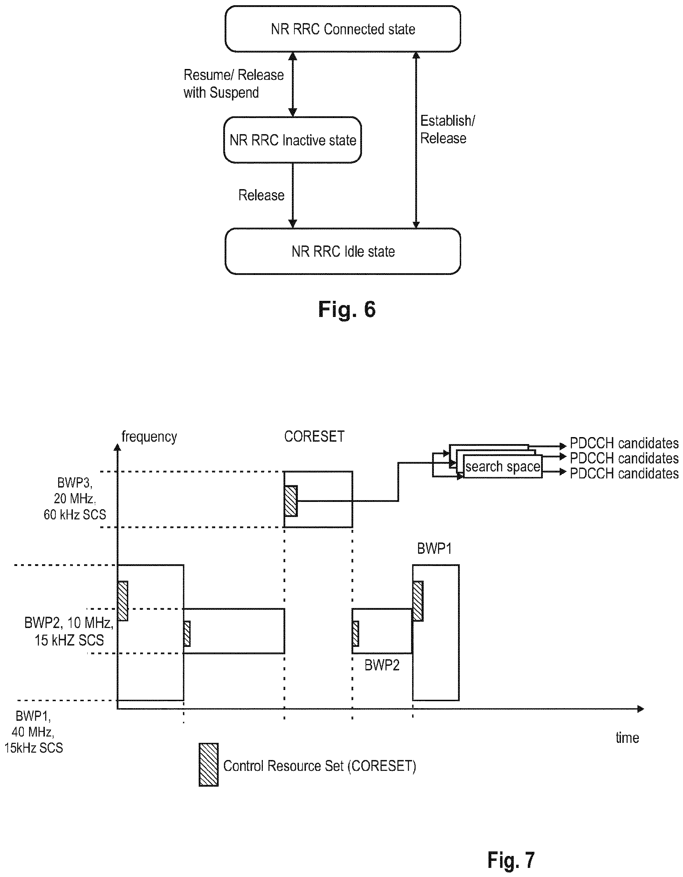

The RRC in NR 5G (see TS 38.331 v15.8.0, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 6****:**
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

### Bandwidth Parts

NR systems will support much wider maximum channel bandwidths than LTE's 20 MHz (e.g. 100s of MHz). Wideband communication is also supported in LTE via carrier aggregation (CA) of up to 20 MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having single wideband carrier also has merit in terms of low control overhead as it needs only single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy efficient solution despite the support of wideband operation. This low-end terminal, which cannot access the whole bandwidth for NR, can benefit therefrom.

A bandwidth part (BWP) is a subset of the total cell bandwidth of a cell, e.g. the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and telling the UE which of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum SI.

Although the UE can be configured with more than one BWP (e.g. up to 4 BWP per serving cell, as currently defined for NR), the UE has only one active DL BWP at a time.

Switching between configured BWPs may be achieved by means of downlink control information (DCIs).

For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Typically, it is envisaged that the downlink control information does not contain the BWP ID.

**Fig. 7** illustrates a scenario where three different BWPs are configured, BWP₁ with a frequency bandwidth of 40 MHz and a subcarrier spacing of 15 kHz, BWP₂ with a width of 10 MHz and a subcarrier spacing of 15 kHz, and BWP₃ with a width of 20 MHz and subcarrier spacing of 60 kHz.

### Downlink Control Information (DCI)

PDCCH monitoring is done by the UE for instance so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v16.0.0 section 7.3.1). An overview is given by the following table.

| **DCI format** | **Usage** | **RNTI** |
|---|---|---|
| 0_0 | Scheduling of PUSCH in one cell | C-RNTI, CS-RNTI, MCS-C-RNTI, Temporary C-RNTI |
| 0_1 | Scheduling of PUSCH in one cell | C-RNTI, CS-RNTI, MCS-C-RNTI, Temporary C-RNTI |
| 1_0 | Scheduling of PDSCH in one cell | C-RNTI, CS-RNTI, MCS-C-RNTI, Temporary C-RNTI, P-RNTI, Si-RNTI, RA-RNTI |
| 1_1 | Scheduling of PDSCH in one cell | C-RNTI, CS-RNTI, MCS-C-RNTI |
| 2_0 | Notifying a group of UEs of the slot format | SFI-RNTI |
| 2_1 | Notifying a group of UEs of the PRB(s) and OFDM symbol(s) where UE may assume no transmission is intended for the UE | INT-RNTI |
| 2_2 | Transmission of TPC commands for PUCCH and PUSCH | TPC-PUCCH-RNTI, TPC-PUSCH-RNTI |
| 2_3 | Transmission of a group of TPC commands for SRS transmissions by one or more UEs | TPC-SRS-RNTI |

PDCCH search spaces are areas in the downlink resource grid (time-frequency resources) where a PDCCH (DCI) may be carried. Put broadly, a radio resource region is used by a base station to transmit control information in the downlink to one or more UEs. The UE performs blind decoding throughout the search space trying to find PDCCH data (DCI). Conceptually, the Search Space concept in 5G NR is similar to LTE Search Space, even though there are many differences in terms of the details.

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in NR can occur at any position within a slot and anywhere in the frequency range of the carrier, except that the UE is not expected to handle CORESETs outside its active bandwidth part (BWP). A CORESET is a set of physical radio resources (e.g. a specific area on the NR downlink resource grid) and a set of parameters that is used to carry PDCCH/DCI.

Accordingly, a UE monitors a set of PDCCH candidates in one or more CORESETs on the active DL BWP on each activated serving cell configured with PDCCH monitoring using the corresponding search space sets where monitoring implies decoding each PDCCH candidate according to the monitored DCI formats, e.g. as defined in 3GPP TS 38.213 version 16.0.0, sections 10 and 11.

In brief, a search space may comprise a plurality of PDCCH candidates associated with the same aggregation level (e.g. where PDCCH candidates differ regarding the DCI formats to monitor). In turn, a search space set may comprise a plurality of search spaces of different aggregation levels, but being associated with the same CORESET. Unlike in LTE, as mentioned above, where control channels span the entire carrier bandwidth, the bandwidth of a CORESET can be configured, e.g. within an active DL frequency bandwidth part (BWP). Put differently, the CORESET configuration defines the frequency resources for the search space set and thus for the comprised PDCCH candidates of search spaces in the set. The CORESET configuration also defines the duration of the search space set, which can have a length of one to three OFDM symbols. On the other hand, the start time is configured by the search space set configuration itself, e.g. at which OFDM symbol the UE starts monitoring the PDCCH of the search spaces of the set. In combination, the configuration of the search space set and the configuration of the CORESET provide an unambiguous definition in the frequency and time domain about the PDCCH monitoring requirements of the UE. Both CORESET and Search space set configurations can be semi-statically configured via RRC signalling.

The first CORESET, CORESET 0, is provided by the master information block (MIB) as part of the configuration of the initial bandwidth part to be able to receive the remaining system information and additional configuration information from the network. After connection setup, a UE can be configured with multiple, potentially overlapping, CORESETs using RRC signalling.

The network may define a common control region and UE specific control region. In NR, the number of CORESETs is limited to 3 per BWP including both common and UE-specific CORESETs. When exemplarily assuming that 4 BWPs are configurable for each serving cell, the maximum number of CORESETs per serving cell would be 12. Generally, the number of search spaces per BWP can be limited, e.g. to 10 as currently in NR, such that the maximum number of search spaces per BWP is 40. Each search space is associated with a CORESET.

The common CORESET is shared by multiple UEs in a cell, such that the network correspondingly needs to take care on alignment with all UEs for this configuration. The common CORESET can be used for Random Access, paging and system information.

In NR, a flexible slot format can be configured for a UE by cell-specific and/or UE-specific higher-layer signaling in a semi-static downlink/uplink assignment manner, or by dynamically signaling e.g. via DCI Format 2_0 in the group-common PDCCH (GC-PDCCH). When the dynamic signaling is configured, a UE is to monitor the GC-PDCCH (DCI format 2_0) that carries the dynamic slot format indication (SFI).

Conceptually, **Fig. 7** provides an exemplary illustration of the relationship between bandwidth parts, CORESETS, search spaces and the PDCCH candidates that a UE can monitor. As apparent from Fig. 7, one CORESET is illustrated per BWP, although more than one are possible including both common and UE-specific CORESETs (e.g. up to 3 CORESETS per BWP). Each CORESET can then have several search spaces in turn with respectively one or more PDCCH candidates.

### Time-domain scheduling in 5G NR

In the time domain, transmissions in 5G NR are organized into frames of length 10ms, each of which is divided into 10 equally sized subframes of length 1ms. A subframe in turn is divided into slots consisting of 14 OFDM symbols each. The duration of a slot in milliseconds depends on the numerology. For instance, for the 15kHz subcarrier spacing, an NR slot thus has the same structure as an LTE subframe with normal cyclic prefix. A subframe in NR serves as a numerology-independent time reference, which is useful, especially in the case of multiple numerologies being mixed on the same carrier, while a slot is the typical dynamic scheduling unit.

In the following, time-domain resource allocation as currently implemented in the 3GPP technical specifications will be presented. The following explanations are to be understood as a particular exemplary implementation of the time-domain resource allocation and should not be understood as the only possible time-domain resource allocation possible. On the contrary, the present disclosure and solutions apply in a corresponding manner to different implementations of the time-domain resource allocation that could be implemented in the future. For instance, whereas the following TDRA tables are based on particular parameters (e.g. 5 parameters), the time-domain resource allocation may also be based on a different number of parameters and/or different parameters.

The time-domain allocation for the data to be received or transmitted is dynamically signaled in the DCI, which is useful because the part of a slot available for downlink reception or uplink transmission may vary from slot to slot as a result of the use of dynamic TDD or the amount of resources used for uplink control signaling. The slot in which the transmission occurs is signaled as part of the time-domain allocation. Although the downlink data in many cases is transmitted in the same slot as the corresponding resource assignment, this is frequently not the case for uplink transmissions.

When the UE is scheduled to receive PDSCH or transmit PUSCH by a DCI, the Time Domain Resource Assignment (TDRA) field value of the DCI indicates a row index of a time-domain resource allocation (TDRA) table. The term "table" is used herein, because the TDRA entries are presented as a table in the corresponding 3GPP technical specifications, but should be interpreted as a logical and rather non-restrictive term. In particular, the present disclosure is not limited to any particular organization, and the TDRA table may be implemented in any manner as a set of parameters associated with the respective entry indices.

For instance, the row of the TDRA table indexed by the DCI defines several parameters that can be used for the allocation of the radio resources in the time domain. In the present example, the TDRA table can indicate the slot offset K0/K2, the start and length indicator SLIV, or directly the start symbol S and the allocation length L. Furthermore, the TDRA table may also indicated the PDSCH mapping type to be assumed in the PDSCH reception and the dmrs-TypeA-Position, parameters that are not directly relating to the scheduled time-domain radio resources. The time-domain allocation field in the DCI is used as an index into this table from which the actual time-domain allocation is then obtained. In such an exemplary implementation, the DCI indication of a row of a TDRA table (one value of the row index) thus corresponds to an indication of a combination of specific values of dmrs-TypeA-Position, PDSCH mapping type, K0 value, S value, and/or L value.

There is one table for uplink scheduling grants and one table for downlink scheduling assignments. For example, 16 rows can be configured where each row contains:
- a slot offset (K0, K2), which is the slot relative to the one where the DCI was obtained. At present, downlink slot offsets from 0 to 3 are possible, while for the uplink slot offsets from 0 to 7 can be used. The slot offset can also be termed as a gap (e.g. time gap or slot gap) between the slot of the PDCCH (including the K0/K2) and the slot of the corresponding PDSCH, scheduled by the PDCCH, as a number of slots.
- The first OFDM symbol in the slot where the data is transmitted.
- The duration of the transmission in number of OFDM symbols in the slot. Not all combinations of start and length fit within one slot. Therefore, the start and length are jointly encoded to cover only the valid combinations.
- For the downlink, the PDSCH mapping type, i.e. the DMRS location is also part of the table. This provides more flexibility compared to separately indicating the mapping type.

It is also possible to configure slot aggregation, i.e. a transmission where the same transport block is repeated across up to 8 slots.

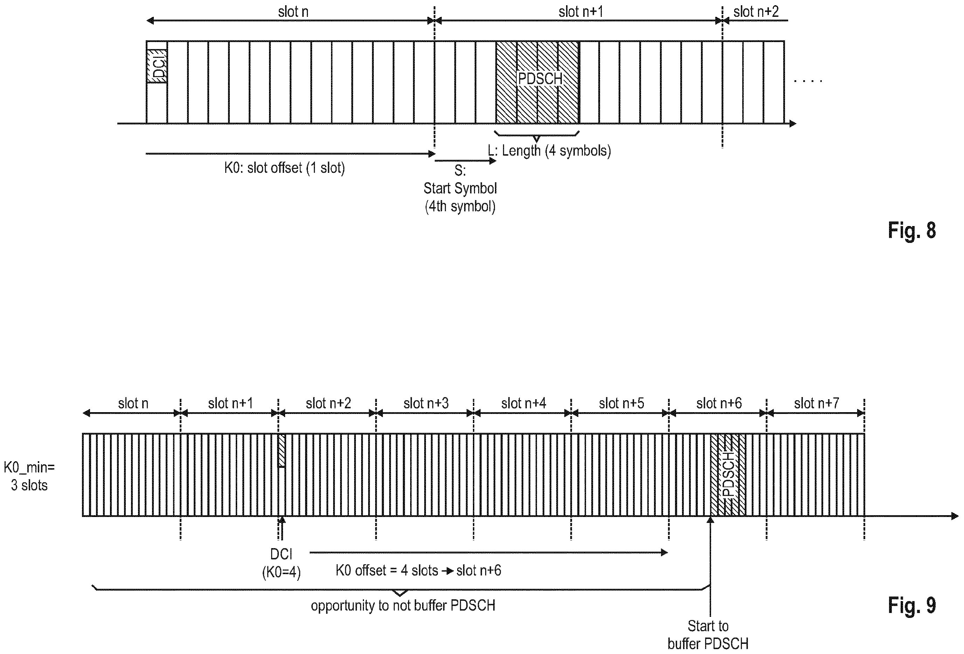

An exemplary time-domain scheduling is illustrated in **Fig. 8****,** in which a DL slot offset of 1 slot is indicated in the DCI in slot n, and the scheduled PDSCH is thus transmitted in slot n+1. The starting symbol is the 4^{th} symbol of that slot n+1, and the duration is 4 symbols.

The current 3GPP standard TS 38.214 v16.0.0, for instance section 5.1.2 for DL and section 6.1.2 for UL, relates to the time-domain scheduling and provides several default tables that can be used in said respect, e.g. when no RRC-configured tables (e.g. *pdsch-TimeDomainAllocationList* in either *pdsch-ConfigCommon* or *pdsch-Config*) are available at the UE. Once these fields (e.g. pdsch-AllocationList) are defined in an RRC message, which elements are used for each PDSCH scheduling is determined by the field called time domain resource assignment (e.g. in DCI 1_0 and DCI 1_1).

In the following a default PDSCH time domain resource allocation A for normal cyclic prefix is presented.

**Table 5.1.2.1.1-2: Default PDSCH time domain resource allocation A for normal CP**

| **Row index** | ***dmrs-TypeA-Position*** | **PDSCH mapping type** | ***K₀*** | ***S*** | ***L*** |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

As apparent therefrom, the K0 value is always assumed to be 0, in practice applying a same-slot downlink scheduling.

In the following a default PUSCH time domain resource allocation A for normal cyclic prefix is presented.

**Table 6.1.2.1.1-2: Default PUSCH time domain resource allocation A for normal CP**

| **Row index** | **PUSCH mapping type** | ***K*₂** | ***S*** | ***L*** |
|---|---|---|---|---|
| 1 | Type A | *j* | 0 | 14 |
| 2 | Type A | *j* | 0 | 12 |
| 3 | Type A | *j* | 0 | 10 |
| 4 | Type B | *j* | 2 | 10 |
| 5 | Type B | *j* | 4 | 10 |
| 6 | Type B | *j* | 4 | 8 |
| 7 | Type B | *j* | 4 | 6 |
| 8 | Type A | *j*+ 1 | 0 | 14 |
| 9 | Type A | *j*+1 | 0 | 12 |
| 10 | Type A | *j*+ 1 | 0 | 10 |
| 11 | Type A | *j*+2 | 0 | 14 |
| 12 | Type A | *j*+2 | 0 | 12 |
| 13 | Type A | *j*+2 | 0 | 10 |
| 14 | Type B | *j* | 8 | 6 |
| 15 | Type A | *j*+3 | 0 | 14 |
| 16 | Type A | *j*+3 | 0 | 10 |

As apparent therefrom, the K2 value is in turn dependent on the parameter j, which is given by the following table.

**Table 6.1.2.1.1-4: Definition of value j**

| ***µ_{PUSCH}*** | ***j*** |
|---|---|
| 0 | 1 |
| 1 | 1 |
| 2 | 2 |
| 3 | 3 |

The parameter *µ_{PUSCH}* is the subcarrier spacing configurations for PUSCH.

As apparent from the above, the PUSCH and PDSCH TDRA tables are based on common parameters, such as the PUSCH mapping type, K0/K2 value, the S value and the L value. K0 is the slot offset between the scheduling PDCCH and the scheduled PDSCH, i.e. for DL scheduling. K2 is the slot offset between the scheduling PDCCH and the scheduled PUSCH, i.e. for UL scheduling. The S value of the TDRA table may indicate the position of the starting symbol of the scheduled resources in the relevant slot (which is the slot in which the scheduled resources are to be received/transmitted, given by K0/K2). The L value of the TDRA table may indicate the length of the PDSCH/PUSCH in terms/units of symbols and/or the length of the scheduled resource in terms/units of symbols.

In the following an example for a RRC-configured TDRA table for the PDSCH is provided, where the parameter K0 varies between 0 and 4 slots.

| **Row index** | ***dmrs-TypeA-Position*** | **PDSCH mapping type** | ***K₀*** | ***S*** | ***L*** |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 1 | 3 | 8 |
| 4 | 2 | Type A | 1 | 2 | 7 |
| | 3 | Type A | 1 | 3 | 6 |
| 5 | 2 | Type A | 1 | 2 | 5 |
| | 3 | Type A | 1 | 3 | 4 |
| 6 | 2 | Type B | 2 | 9 | 4 |
| | 3 | Type B | 2 | 10 | 4 |
| 7 | 2 | Type B | 2 | 4 | 4 |
| | 3 | Type B | 2 | 6 | 4 |
| 8 | 2,3 | Type B | 2 | 5 | 7 |
| 9 | 2,3 | Type B | 3 | 5 | 2 |
| 10 | 2,3 | Type B | 3 | 9 | 2 |
| 11 | 2,3 | Type B | 3 | 12 | 2 |
| 12 | 2,3 | Type A | 3 | 1 | 13 |
| 13 | 2,3 | Type A | 4 | 1 | 6 |
| 14 | 2,3 | Type A | 4 | 2 | 4 |
| 15 | 2,3 | Type B | 4 | 4 | 7 |
| 16 | 2,3 | Type B | 4 | 8 | 4 |

Correspondingly, the RRC-configured TDRA table allows for K0 values of up to 4 time slots, thus effectively allowing same-slot as well as cross-slot scheduling (i.e. DCI and corresponding resource allocation in different time slots).

In the current 5G-specific exemplary implementations, a configured TDRA table is signaled within PDSCH-related configuration via RRC (e.g. the information element *PDSCH-Config,* of 3GPP TS 38.331 v15.9.0), which in turn may be within an information element pertaining to a Bandwidth Part ((BWP)-DownlinkDedicated). Therefore, if the TDRA table is higher-layer configured, the TDRA table may be BWP-specific. A communication device may use a default table or may apply the higher-layer-configured TDRA table (termed *pdsch-TimeDomainAllocationList* in either *pdsch-ConfigCommon* or *pdsch-Config*)*.* However, this is only one possible example of interaction between TDRA configuration and BWP concept of NR. The present invention does not presuppose employing BWP and is not limited to resource allocation using TDRA tables.

### Power saving using Cross-slot scheduling

As presented above, time-domain resource allocation in NR supports flexible timings between PDCCH and PDSCH or PUSCH, wherein the slot timing K0/K2 is informed through the DCI.

Cross-slot scheduling was deemed a power-saving tool in NR Rel.16, by allowing the UE to use a slower PDCCH processing timeline, to skip buffering PDSCH in certain slots and to use a slower PDSCH/PUSCH processing timeline.

To enable this power saving operation, some of the following aspects have already been discussed and partly standardized.

A 1-bit field is introduced in the DCI formats 0_1 (PUSCH) and 1_1 (PDSCH) to indicate a minimum slot scheduling offset (e.g. termed here K0_min and K2_min respectively) between the control channel and the data channel, which for example can be implemented as a joint indication for both a minimum K0 (DL) and K2 (UL).

In one exemplary implementation according to the 3GPP Technical Standard TS 38.212 v16.0.0, the 1-bit field is defined as follows: "
- *Minimum applicable scheduling offset indicator - 0 or 1 bit*
- *0 bit if higher layer parameter minimumSchedulingOffset is not configured;*
- *1 bit if higher layer parameter minimumSchedulingOffset is configured. The 1 bit indication is used to determine the minimum applicable K0 for the active DL BWP and the minimum applicable K2 value for the active UL BWP according to Table 7.3.1.1.2-33. If the minimum applicable K0 is indicated, the minimum applicable value of the aperiodic CSI-RS triggering offset for an active DL BWP shall be the* same *as the minimum applicable K0 value.*
"

The table cited in the above citation is the following, also taken from TS 38.212:

**Table 7.3.1.1.2-33: Joint indication of minimum applicable scheduling offset K0/K2**

| Bit field mapped to index | Minimum applicable K0 for the active DL BWP, if *minimumScheduiingOffset* is configured for the DL BWP | Minimum applicable K2 for the active UL BWP, if *minimumSchedulingOffset* is configured for the UL BWP |
|---|---|---|
| 0 | The first value configured by *minimumSchedulingOffset* for the active DL BWP | The first value configured by *minimumSchedulingOffset* for the active UL BWP |
| 1 | The second value configured by *minimumSchedulingOffset* for the active DL BWP if the second value is configured; 0 otherwise | The second value configured by *minimumSchedulingOffset* for the active UL BWP if the second value is configured; 0 otherwise |

The 1-bit field is not provided by other DCI formats other than 0_1 and 1_1 according to the 3GPP specification.

According to the above, one or two values can be configured by the parameter *minimumSchedulingOffset* (e.g. by using RRC), and the 1-bit field in the DCI then selects one of the configured two values respectively for the K0_min and K2_min parameters.

The TDRA tables of the technical standard, mentioned above, will thus not be fully applicable, because some rows of the TDRA tables will not be valid in view of K0_min and K2_min. For instance, the TDRA tables can be considered as being filtered based on the indicated minimum slot offset value indexed by the DCI, such that e.g. only the K0/K2 values larger than or equal to the minimum slot scheduling offset should be used and are to be expected by the UE. In other words, particular time-domain resource allocations are excluded or not considered valid, depending on the minimum K0 / K2 value indicated as the minimum slot offset value.

The following table for a RRC-configured TDRA table (introduced above) for PDSCH is illustrated by filtering specific rows (stroked out) using a minimum scheduling offset value of 2 as indicated by a DCI.

| **Row index** | ***dmrs-TypeA-Position*** | **PDSCH mapping type** | ***K₀*** | ***S*** | ***L*** |
|---|---|---|---|---|---|
| | | | | | |
| | | | | | |
| | | | | | |
| | | | | | |
| | | | | | |
| | | | | | |
| 4 | | | | | |
| | | | | | |
| | | | | | |
| | | | | | 4 |
| 6 | 2 | Type B | 2 | 9 | 4 |
| | 3 | Type B | 2 | 10 | 4 |
| 7 | 2 | Type B | 2 | 4 | 4 |
| | 3 | Type B | 2 | 6 | 4 |
| 8 | 2,3 | Type B | 2 | 5 | 7 |
| 9 | 2,3 | Type B | 3 | 5 | 2 |
| 10 | 2,3 | Type B | 3 | 9 | 2 |
| 11 | 2,3 | Type B | 3 | 12 | 2 |
| 12 | 2,3 | Type A | 3 | 1 | 13 |
| 13 | 2,3 | Type A | 4 | 1 | 6 |
| 14 | 2,3 | Type A | 4 | 2 | 4 |
| 15 | 2,3 | Type B | 4 | 4 | 7 |
| 16 | 2,3 | Type B | 4 | 8 | 4 |

Correspondingly, all rows referring to a K0-value smaller than the minimum scheduling offset of 2 (i.e. K0=0, 1) will be filtered away and are not to be used. The UE should expect the gNB to schedule any downlink transmission at least 2 slots after transmitting a DCI. In the above example, the rows 6-16 are valid, such that the UE has to be prepared to be scheduled with such a corresponding slot offset.

Similarly, when exemplary assuming to use K0_min = 3 (not shown above), then all rows with K0 < 3 are invalid and not to be used anymore. The UE should expect the gNB to schedule any downlink transmission at least 3 slots after transmitting a DCI. In the above example, the rows 9-16 would be valid, such that the UE has to be prepared to be scheduled with such a corresponding slot offset.

According to the current example 5G-conformant implementation, there can be some exceptions where the minimum scheduling offset is not to be applied, e.g. when the PDSCH transmission is scheduled with C-RNTI, CS-RNTI (Configured Scheduled RNTI) or MCS-C-RNTI (Modulation-Coding-Scheme C-RNTI) in the common search space associated with CORESET0 and the default PDSCH time domain resource allocation is used; or when the PDSCH transmission is scheduled with the SI-RNTI (System Information) or RA-RNTI (Random Access Response RNTI). With regard to the uplink , the minimum scheduling offset is not applied when the PUSCH transmission is scheduled by an RAR (Random Access Response) UL grant for a contention-free RACH procedure or when the PUSCH is scheduled with the TC-RNTI. These limitations are defined in the respective sections of TS 38.214:
*5.1.2.1: "When the UE configured with [minimumSchedulingOffset] in an active DL BWP it applies a minimum scheduling offset restriction indicated by the ['Minimum applicable scheduling offset indicator'] field in DCI format 0_1 or 1_1. When the UE configured with [minimumSchedulingOffset] in active DL BWP and it has not received ['Minimum applicable scheduling offset indicator'] field in DCI format 0_1 or 1_1, UE shall apply a minimum scheduling offset restriction indicated based on ['Minimum applicable scheduling offset indicator'] value '0'. When the minimum scheduling offset restriction is applied the UE is not expected to be scheduled with a DCI in slot n to receive a PDSCH scheduled with C-RNTI, CS-RNTI or MCS-C-RNTI with K₀ smaller than the applicable minimum scheduling offset restriction K₀ₘᵢₙ. The minimum scheduling offset restriction is not applied when PDSCH transmission is scheduled with C-RNTI, CS-RNTI or MCS-C-RNTI in common search space associated with CORESET0 and default PDSCH time domain resource allocation is used or when PDSCH transmission is scheduled with SI-RNTI or RA-RNTI. The application delay of the change of the minimum scheduling offset restriction is determined in Section 5.3.1."*
6.1.2.1: *"When the UE configured with [minimum SchedulingOffset] in active UL BWP it applies a minimum scheduling offset restriction indicated by the ['Minimum applicable scheduling offset indicator'] field in DCI format 0_1 or 1_1. When the UE configured with [minimumScheduiingOffset] in active UL BWP and it has not received ['Minimum applicable scheduling offset indicator'] field in DCI format 0_1 or 1_1, the UE shall apply a minimum scheduling offset restriction indicated based on ['Minimum applicable scheduling offset indicator'] value '0'. When the minimum scheduling offset restriction is applied the UE is not expected to be scheduled with a DCI in slot n to transmit a PUSCH scheduled with C-RNTI, CS-RNTI or MCS-C-RNTI with K₂ smaller than the applicable minimum scheduling offset restriction K₂ₘᵢₙ in slot n. The minimum scheduling restriction is not applied when PUSCH transmission is scheduled by RAR UL grant for RACH procedure, or when PUSCH is scheduled with TC-RNTI. The application delay of the change of the minimum scheduling offset restriction is determined in Section 5.3.1*."

Put in brief, the UE is configured to use the minimum slot scheduling offset (see term "shall"), with some possible exceptions known to the UE.

When the minimum slot scheduling offset is defined by a DCI, it can be applied by the UE, e.g. until it is replaced by a new minimum slot scheduling offset value (e.g. in another DCI). In one exemplary implementation of the 5G TS, an application delay can be taken into account for determining when to update the minimum scheduling offset, according to section 5.3.1 of TS 38.214 v16.0.0.

Through the use of this cross-slot scheduling restriction, i.e. by ensuring that the UE only needs to expect cross-slot scheduling with a minimum time slot gap (rather than also same-slot scheduling), the UE can use a slower PDCCH processing timeline and can skip buffering PDSCH in certain slots. Further, also the time for processing the PDSCH/PUSCH is relaxed because more time slots are available until the transmission in DL or UL is due.

As an example, for same-slot PDSCH scheduling, the UE needs to buffer all the Physical Resource Blocks in the currently-active bandwidth part in order to be ready to receive the PDCCH and the PDSCH within the same slot. On the other hand, for a cross-slot PDSCH scheduling with a minimum scheduling offset of K0_min time slots, the UE is able to skip buffering the PDSCH e.g. at least in the slots between the current slot (e.g. in which the PDCCH is received) and the slot that is K0_min - 1 slots after the current slot. In those next time slots the UE can tune its radio frequency unit with a narrow bandwidth that is wide enough to receive and buffer the PDCCH CORESET, such that the UE can save its power. After receiving the PDCCH, the UE may turn off its transceiver for power saving, and the UE may decode the PDCCH slowly.

The above-mentioned K0_min value and advantages will be briefly explained with reference to Fig. 9. **Fig. 9** illustrates exemplarily and in a simplified manner the timing of the scheduling DCI and a corresponding scheduled PDSCH and an effect of the minimum K value concept, assuming e.g. the use of a minimum K0 value. It is first exemplarily assumed that the K0_min value is defined to be 3 slots. Although not illustrated, it may be assumed that the K0_min value was already configured in the UE, e.g. based on a previously-received DCI. The UE thus expects that any scheduling DCI received from the gNB will instruct a PDSCH with a K0 value larger or equal to the K0_min value, i.e. >=3. The UE when in slot n does not decode a PDCCH and thus knows at this point in time that the earliest slot with a PDSCH could be slot n+4 (i.e. next slot n+1 + 3-slot offset) and that no PDSCH will be scheduled in slots n, n+1, n+2, n+3. Similarly, the UE, when not decoding a PDCCH in slot n+1, knows at that point in time that the earliest slot with a PDSCH could be slot n+5 (i.e. next slot n+2 + 3-slot offset) and that no PDSCH will be scheduled in slots n+1, n+2, n+3, n+4. In the present example, the PDCCH for scheduling a downlink transmission is assumed to be received in slot n+2, indicating a cross-slot scheduling parameter K0=4, thus pointing to slot n+6 that will be used to transmit the PDSCH in the downlink. Overall, the UE will thus have the opportunity to not buffer OFDM symbol data from the PDSCH regions between slot n and slot n+5, including the first OFDM symbols of slot n+6 before the actual scheduled PDSCH starts.

On the other hand, without the K0_min parameter, the UE would need to be prepared to be scheduled in the same slot, i.e. K0= 0, where the scheduling DCI and the scheduled PDSCH are received in the same slot. In said case, taking into account the PDCCH processing time, the UE will likely have to buffer the PDSCH for the same slot and possibly for one or more subsequent slots, before determining the actual K0 value. How long the PDCCH decoding takes depends on the UE implementation, e.g. which is restricted by/based on the PDSCH location and/or the total processing timeline budget for PDCCH, PDSCH and HARQ-ACK feedback.

### Paging Procedures in 5G NR

An exemplary implementation of the paging function in 5G NR that involves PDCCH monitoring, according to the currently standardized version, will be explained in a simplified and abbreviated form in the following.

There are two different paging procedures in 5G NR, a RAN-based paging procedure (e.g. based on RAN-based notification areas) and a core-network-based paging procedure (see for instance 3GPP TS 38.300 v15.6.0, TS 38.304 v15.4.0, and TS 38.331 v15.9.0 referring to RAN paging and CN paging in several sections thereof, such as section 5.3.2 "Paging" in TS 38.331 or section 9.2.5 "Paging" in TS 38.300).

Paging allows the network to reach UEs in RRC_IDLE and RRC_INACTIVE state through Paging messages, and to notify UEs in RRC_IDLE, RRC_INACTIVE, and RRC_CONNECTED state of system information change and public warning information (such as ETWS/CMAS, Earthquake and Tsunami Warning System/ Commercial Mobile Alert System) indications through Short Messages. Both the paging messages and the Short Messages are addressed with P-RNTI on the PDCCH to be monitored by the UE. But while the actual paging messages (e.g. with the paging records) are then sent on PDSCH (as indicated by the PDCCH), the Short Messages can be sent over PDCCH directly.

While in RRC_IDLE the UE monitors the paging channels for CN-initiated paging, in RRC_INACTIVE the UE also monitors paging channels for RAN-initiated paging. A UE need not monitor paging channels continuously though; Paging DRX is defined where the UE in RRC_IDLE or RRC_INACTIVE is only required to monitor paging channels during one Paging Occasion (PO) per DRX cycle (see 3GPP TS 38.304 v15.3.0, e.g. sections 6.1 and 7.1). The Paging DRX cycles are configured by the network.

The POs of a UE for CN-initiated and RAN-initiated paging are based on the same UE ID, resulting in overlapping POs for both. The number of POs in a paging frame (PF) is configurable via system information, and a network may distribute UEs to those POs based on their IDs. A PO is a set of PDCCH monitoring occasions and can consist of multiple time slots (e.g. subframe or OFDM symbol) where paging DCI can be sent. One PF is one Radio Frame and may contain one or multiple PO(s) or starting point of a PO.

When in RRC_CONNECTED, the UE monitors the paging channels in any PO signaled in system information for a System Information (SI) change indication and/or a PWS (Public Warning System) notification. In case of Bandwidth Adaptation (BA) (see section 6.10 in TS 38.300), a UE in RRC_CONNECTED only monitors paging channels on the active BWP with common search space configured.

When the UE receives a paging message, the PDCCH monitoring can be stopped by the UE. Depending on the paging cause, the UE may continue with e.g. obtaining system information, or establishing the RRC connection with the base station and then receiving the data (traffic/instruction) from the network.

### Further power saving possibilities

3GPP is constantly looking for further possibilities of UE power saving. One possibility is to specify power saving enhancements for UEs in idle or inactive state as well as in the connected state.

The paging procedure is performed by UEs in the idle state, the inactive state as well as the connected state. Paging consumes relatively significant power for NR UEs in RRC idle state and RRC inactive states, while consuming relatively less power for UEs in the connected state.

Thus, optimizations of paging may save a large portion of the UE power consumption.

For instance, for each paging cycle, it may take the UE up to tens of ms to receive the paging message, and the whole procedure may include the UE's hardware ramp-up procedure, the (re-)synchronization procedure and the paging PDCCH monitoring and paging PDSCH reception and UE's hardware ramp-down procedure. Power consumption for paging reception includes the acquiring of the time and frequency synchronization to the gNB, before the paging reception, and then after (re-)synchronizing to the network, the UE needs to monitor the PDCCH within its paging monitoring occasions.

When the UE wakes up from the sleep mode while in idle/inactive state to monitor paging, the power consumption depends on
- How often and how long the UE needs to remain (or stay) awake /active for paging purposes.
- How fast the processing timeline the UE needs to maintain to receive and process the PDCCH and PDSCH of paging.
- The PDSCH buffering behavior after the PDCCH monitoring occasions of the UE's paging occasion (PO) and paging frame (PF).
   ∘ UE anyway needs to buffer the PDSCH in the same slot with the PDCH if the default TDRA table is used
   ∘ If common TDRA table is configured, the behavior of the UE depends on the minimum K0 value in the table.

The inventors have identified the possibility of improving the paging procedure further in order to save power at the UE.

The different implementations and variants of the improved paging procedure to be discussed in the following can be used by UEs in the idle/inactive/connected state, even though it may be primarily described for a UE in the idle or inactive state. Furthermore, the improved paging procedure can be applied to both RAN-based paging and core-network-based paging.

### Embodiments

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **"minimum slot time-domain scheduling restriction"** used herein should be understood broadly and may e.g. refer to a restriction in the operation of the UE and/or the base station with respect to or to fulfill a minimum slot time-domain scheduling. For instance, it may be understood as indicating a minimum amount of slots (time slots) between a received (paging) DCI and the corresponding (paging) transmission indicated by the received (paging) DCI. In the present examples for an improved paging procedure, the restriction is to apply primarily to a paging DCI and a paging message transmitted in the downlink. However, conceptually, the restriction can apply to any DCI and the corresponding transmission in the uplink or downlink indicated by the DCI.

Using different terminology for this concept is equally possible, such as "minimum cross-slot time-domain scheduling restriction", "minimum time scheduling restriction", "minimum time scheduling", "minimum cross-slot scheduling" or other suitable expressions.

The similar term **"minimum slot time-domain scheduling parameter"** used herein should be understood broadly and may e.g. refer to a parameter that reflects the above discussed minimum slot time-domain scheduling restriction. For instance, the parameter can be explicit in that it exists as separate parameter with a particular value (see e.g. subsequent solutions based on K0_min) or can be implicit in that it is effectively applied as such without being a particular separate parameter (see e.g. subsequent solutions based on a TDRA table where all K0 values implicitly comply with being larger than a value).

Another related term is **"the slot time-domain scheduling parameter"** used herein, which refers to a parameter that allows to determine a scheduled time slot in the time domain, e.g. for a cross-slot or same-slot scheduling of a paging message in the downlink. In some exemplary implementations, it is the parameter K0 of the TDRA table.

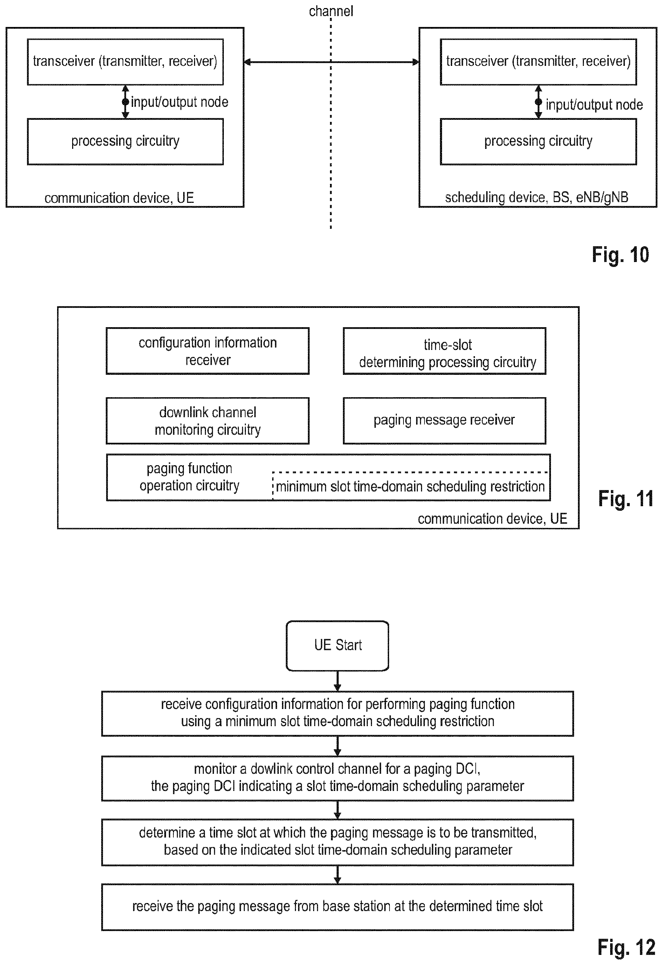

**Fig. 10** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

An improved paging procedure will be described in the following. In said connection, an improved UE and improved base station are presented which participate in the improved paging procedure. Corresponding methods for the UE behavior and the base station behavior are provided as well. **Fig. 11** illustrates a simplified and exemplary UE structure according to one exemplary solution of the improved paging procedure, and can be implemented based on the general UE structure explained in connection with Fig. 10. The various structural elements of the UE illustrated in said figure can be interconnected between one another e.g. with corresponding input/output nodes (not shown) e.g. in order to exchange control and user data and other signals. Although not shown for illustration purposes, the UE may include further structural elements.

As apparent from Fig. 11, the UE may include a configuration information receiver, a paging function operation circuitry which is able to apply a minimum slot time-domain scheduling restriction (see dashed box), a downlink channel monitoring circuitry, a time-slot determining processing circuitry, and a paging message receiver.

In the present case as will become apparent from the below disclosure, the processing circuitry of the UE can thus be exemplarily configured to at least partly perform one or more of determining a time slot, a TDRA table, a paging identity, operating a paging function, etc.

The receiver of the UE can thus be exemplarily configured to at least partly perform one or more of receiving a configuration information, a paging DCI, a paging message, etc.

One exemplary solution as will be disclosed in more detail further below is implemented by a UE that includes the following. A receiver of the UE receives configuration information to configure the UE to perform a paging function using a minimum slot time-domain scheduling restriction. The minimum slot time-domain scheduling restriction indicates a minimum amount of time slots between a received paging downlink control information, DCI, and a corresponding paging message transmitted in the downlink as indicated by the received paging DCI. The receiver monitors a downlink control channel for a paging DCI transmitted from a base station that controls a radio cell in which the user equipment is located. The paging DCI indicates a slot time-domain scheduling parameter. The UE further includes a processor which determines a time slot at which the corresponding paging message is transmitted by the base station, based on the indicated slot time-domain scheduling parameter. The receiver receives the corresponding paging message from the base station at the determined time slot.

A corresponding sequence diagram for an exemplary UE behavior in line with the above-discussed UE is illustrated in **Fig. 12****.**According to this improved paging procedure, the UE receives configuration information to configure the UE to perform a paging function using a minimum slot time-domain scheduling restriction. The minimum slot time-domain scheduling restriction indicates a minimum amount of time slots between a received paging downlink control information, DCI, and a corresponding paging message transmitted in the downlink as indicated by the received paging DCI. The UE monitors a downlink control channel for a paging DCI transmitted from a base station that controls a radio cell in which the user equipment is located, wherein the paging DCI indicates a slot time-domain scheduling parameter. The UE determines a time slot at which the corresponding paging message is transmitted by the base station, based on the indicated slot time-domain scheduling parameter. The UE then receives the corresponding paging message from the base station at the determined time slot.

According to this improved paging procedure, the UE is able to save power by taking into account the minimum slot time-domain scheduling restriction during its operation, e.g. related to the paging function. For instance, the UE operates in a manner such that the UE does not expect to be scheduled for receiving the paging message with a slot time-domain scheduling parameter that is smaller than the configured minimum restriction. Thus, as of the time when the UE is configured to perform the paging function based on this minimum slot time-domain scheduling restriction, power saving is facilitated for the UE. The UE may achieve to save power in several ways depending on different exemplary implementations.

For instance, the UE is operated to receive and buffer data from the base station. The UE, based on the minimum time slot scheduling restriction, may decide to skip buffering data from one or more time slots that fall into the time gap created by the minimum time slot scheduling restriction. This benefits the UE power saving because of skipping buffering unnecessary data (e.g. PDSCH).

As still another example, the UE might allow for a slower decoding of the PDCCH including the paging DCI. As the PDSCH will be several slots later than the PDCCH, the PDCCH can be decoded until the possibly earliest PDSCH or even after that. UE then from the decoded DCI can know which part of the PDSCH to buffer and decode. Put more generally, a slower PDCCH processing timeline can be adopted by the UE.

Moreover, other power saving functions performed by the UE can also benefit from the knowledge of a minimum slot time-domain scheduling restriction for the paging function. For example, the UE might choose to go into a sleeping mode for some period within this gap to save power before start to buffering the PDSCH.

The amount of power that can be saved by the UE may also be influenced by the length of the time gap, i.e. by the number of time slots defined by the minimum slot time-domain scheduling restriction. For instance, the larger the minimum number of time slots, the larger the power save will be possible for the UE, e.g. by skipping the data buffering of more time slots.

According to one example, the minimum number of time slots defined by the minimum slot time-domain scheduling restriction is one or more time slots, thereby excluding the same-slot scheduling possibility.

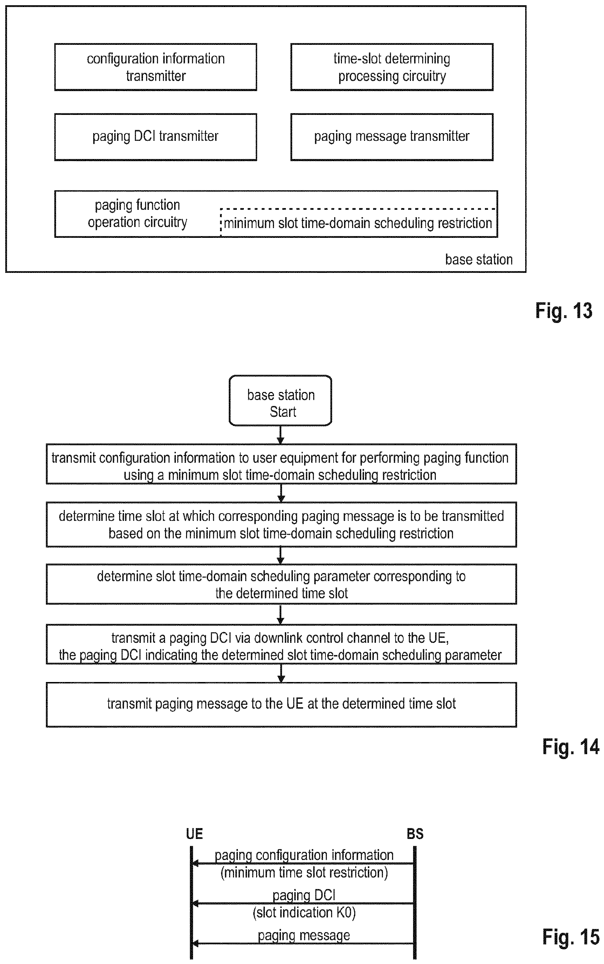

The improved paging procedure also provides an improved radio base station. **Fig. 13** illustrates a simplified and exemplary base station structure according to one exemplary solution of the improved paging procedure, and can be implemented based on the general base station structure explained in connection with Fig. 10. The various structural elements of the radio base station illustrated in said figure can be interconnected between one another e.g. with corresponding input/output nodes (not shown) e.g. in order to exchange control and user data and other signals. Although not shown for illustration purposes, the base station may include further structural elements.

As apparent from Fig. 13, the base station may include a configuration information transmitter, a paging function operation circuitry which is able to apply a minimum slot time-domain scheduling restriction (see dashed box), a time-slot determining processing circuitry, a paging DCI transmitter and a paging message transmitter.

In the present case as will become apparent from the below disclosure, the processing circuitry of the base station can thus be exemplarily configured to at least partly perform one or more of determining a time slot, operating a paging function etc.. The transmitter of the base station can thus be exemplarily configured to at least partly perform one or more of transmitting configuration information, a paging DCI and a paging message to the UE, etc.

One solution as will be disclosed in more detail further below is implemented by a radio base station that includes the following. A transmitter of the base station transmits configuration information to a user equipment located in a radio cell controlled by the base station, wherein the configuration information configures the UE to perform a paging function using a minimum slot time-domain scheduling restriction. The minimum slot time-domain scheduling restriction indicates a minimum amount of time slots between a received paging downlink control information, DCI, and a corresponding paging message transmitted in the downlink as indicated by the received paging DCI. The processor of the base station determines a time slot at which the corresponding paging message is to be transmitted to the UE based on the minimum slot time-domain scheduling restriction and determines a slot time-domain scheduling parameter corresponding to the determined time slot. The transmitter of the UE transmits a paging DCI via a downlink control channel to the UE, wherein the paging DCI indicates the determined slot time-domain scheduling parameter. Further, the transmitter of the base station transmits the corresponding paging message to the UE at the determined time slot.

A corresponding sequence diagram for an exemplary base station behavior in line with the above-discussed base station is illustrated in **Fig. 14****.** According to this improved base station behavior for paging, the base station transmits configuration information to a user equipment located in a radio cell controlled by the base station. The configuration information configures the UE to perform a paging function using a minimum slot time-domain scheduling restriction. The minimum slot time-domain scheduling restriction indicates a minimum amount of time slots between a received paging downlink control information, DCI, and a corresponding paging message transmitted in the downlink as indicated by the received paging DCI. The base station determines a time slot at which the corresponding paging message is to be transmitted to the UE based on the minimum slot time-domain scheduling restriction and determines a slot time-domain scheduling parameter corresponding to the determined time slot. The base station transmits a paging DCI via a downlink control channel to the UE, wherein the paging DCI indicates the determined slot time-domain scheduling parameter. The base station transmits the corresponding paging message to the UE at the determined time slot.

Correspondingly, the improved base station facilitates that the UE saves power, as explained above.

A simplified and exemplary communication exchange is illustrated in **Fig. 15****.** As apparent therefrom, the base station transmits the paging configuration information to the UE so as to configure the UE to perform the paging function based on the minimum slot time-domain scheduling restriction. Afterwards, the base station and UE participate in the improved paging function in that first a paging DCI is transmitted from the base station to the UE that schedules (based on a slot indication KO) a subsequent paging message from the base station.

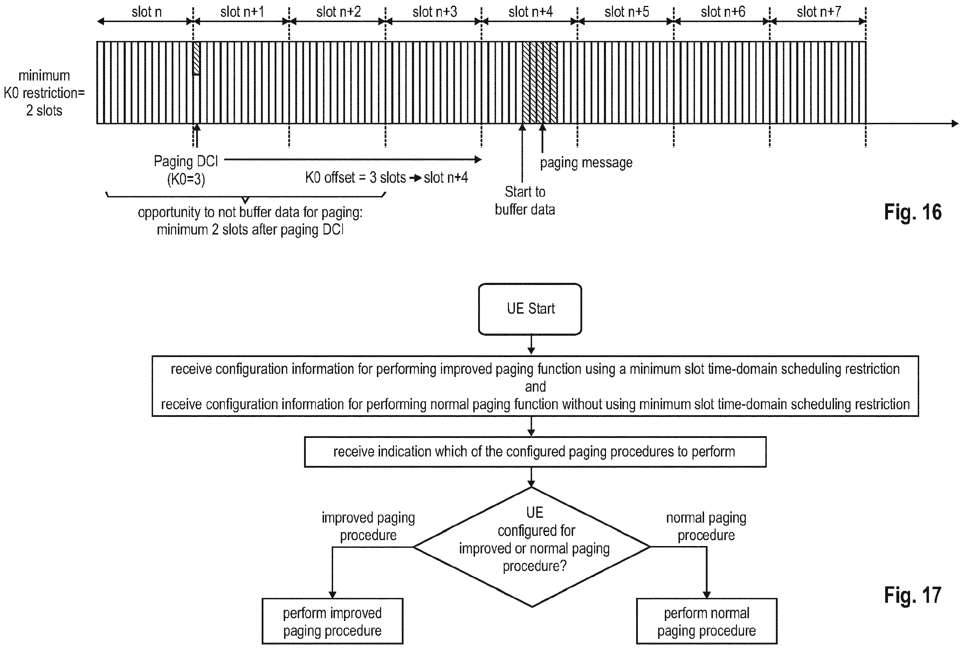

**Fig. 16** illustrates the possible power saving advantage based on a simplified and exemplary timing of the paging DCI and paging message. It is exemplary assumed that the UE is suitably configured for the improved paging procedure and thus applies the configured minimum slot time-domain scheduling restriction, e.g. of two slots. The UE is thus not to expect to receive any paging DCI from the base station scheduling a paging message at a time slot less than two slots away. Put differently, the UE expects that any paging DCI instructed by the base station will schedule a paging message with a slot time gap equal to or larger than the minimum scheduling restriction of two slots.

It is further exemplary assumed that no paging DCI is received in slot n, but a paging DCI is received in slot n+1. Correspondingly, the UE at time slot n+1 derives that the earliest time slot with a paging message is time slot n+3 (i.e. slot n+1 + 2) such that no paging message will be scheduled in time slots n+1, n+2.

In the present example of Fig. 6, the paging DCI of slot n+1 is scheduling a paging message at slot n+4 by indicating the time slot offset (K0) of three slots, which is indeed larger than the minimum scheduling restriction.

On the other hand, without the minimum slot time-domain scheduling restriction, such as a legacy UE, the UE would need to be prepared to be scheduled in the same slot, i.e. the time slot offset K0 = 0. In said case, taking into account the PDCCH processing time, the UE will likely have to buffer the PDSCH for the same slot and possibly for one or more subsequent slots, before determining the actual K0 value of the paging DCI.

According to one specific exemplary implementation, that can be combined with other variants and implementations of the improved paging procedure, the above-discussed determination of the time slot at which the corresponding paging message is transmitted by the base station can be implemented based on a similar or same usage of a time-domain resource allocation table (TDRA table) as in the current 5G NR standardized implementations. In this case, different time-domain scheduling parameters, such as one or more of the ones discussed above (e.g. S, L, K0, possibly also dmrs-TypeA-Position, PDSCH mapping type) can be defined as part of a TDRA table, including the above-mentioned slot time-domain scheduling parameter (K0). The corresponding parameters are jointly selected as a set of parameters, based on an index (here e.g. a row index) transmitted by the base station in the paging DCI.

The improved paging procedure can be performed by UEs in different states, such as the idle, inactive and connected states of the RRC layer. The paging function is performed by the UE in all of these states, although the amount of power spent on the paging function is more significant for a UE in the inactive or idle state. On the other hand, the amount of power spent on the paging function is less significant overall for a UE in the connected state, because the connected UE will use a lot of power for other functions.

As exemplarily presented above, the UE is configured to perform the improved paging function based on receiving configuration information from the base station. It was presumed that the UE is always configured to perform the improved paging procedure. However, a UE can also be configurable to perform either the improved paging procedure described herein or another, normal, paging procedure, such as the one described for legacy UEs (see above background part, section titled "Paging Procedures in 5G NR").

Correspondingly, the base station or core network is able to control that the UE performs or not performs the improved paging function. The UE therefrom can be able to determine which paging procedure to perform, e.g. the improved paging procedure or a normal, legacy, paging procedure. **Fig. 17** illustrates an additional exemplary UE behavior that could be implemented in combination with other UE behavior described here, such as the one explained in connection with Fig. 12. As apparent from Fig. 17, the UE would be configured for both the improved paging procedure and normal paging procedure, and would then further receive a suitable indication which paging procedure it is to perform. The UE would then proceed to determine which paging procedure to perform based on the received indication and then perform the determined paging procedure, e.g. the improved paging procedure explained herein (such as described in connection with Fig. 12).

The suitable configuration of the UE for performing the improved paging procedure can be implemented in several ways.

According to one exemplary configuration implementation, the UE is suitably provided with the necessary information to be able to perform the improved paging function. This may include different types of information, such as the actual minimum slot time-domain scheduling restriction (e.g. number of minimum time slots), but may also include other information, e.g. depending on the particular implementation of the improved paging function, which will be described below, such as the new paging identity of the UE, the new search space and optionally new CORESET of the improved paging, the TDRA table to apply for the improved paging, etc.

In such a case, the base station may provide a suitable indication to the UE, such that the UE is able to determine when it is supposed to apply the improved paging function and when the UE will apply the normal paging function, without the minimum slot time-domain scheduling restriction.

According to an exemplary implementation, the indication can be in the form of a disabling/enabling indication, e.g. one bit (such as a flag). One value of the bit will instruct the UE to perform the improved paging function as previously configured, and the other value of the bit will instruct the UE to perform a normal paging function.

There are other possible indications, depending on the particular implementations, such as the ones discussed in more detail in the following. For instance, in an implementation which uses a new paging identity (different from the normal paging identity) for performing the improved paging procedure (for more details see below), the indication could be the configuration of the new paging identity, such that the UE performs the improved paging procedure when determining that it is configured with the new paging identity (conversely, the UE performs the normal paging procedure if not configured with the new paging identity).

Another implementation-specific solution uses a new search space (different from the normal search space for paging) for performing the improved paging procedure (for more details see below). In this case, the indication could be the configuration of the new search space, such that the UE performs the improved paging procedure when determining that it is configured with the new search space (conversely, the UE performs the normal paging procedure if not configured with the new search space).

Still another implementation-specific solution uses a new TDRA table (different from the normal TDRA table for paging) for performing the improved paging procedure (for more details see below). In this case, the indication could be the configuration of the new TDRA table, such that the UE performs the improved paging procedure when determining that it is configured with the new TDRA table (conversely, the UE performs the normal paging procedure if not configured with the new TDRA table).

Still another implementation-specific solution uses a suitable minimum slot time-domain scheduling parameter (not existing for the normal paging) for performing the improved paging procedure (for more details see below). In this case, the indication could be the configuration of the new minimum slot time-domain scheduling parameter, such that the UE performs the improved paging procedure when determining that it is configured with the new minimum slot time-domain scheduling parameter (conversely, the UE performs the normal paging procedure if not configured with the new minimum slot time-domain scheduling parameter).

As other possible examples, the indication (e.g. the indication being a one-bit flag) can be transmitted from the base station to the UE using one of the following means.

The indication can be broadcast by the base station in its cell using system information. Thereby, the base station could achieve to reach and toggle the improved paging function for many or all UEs in its radio cell.

Another option is to use dedicated messages addressed to the UE, e.g. using the RRC protocol, where the base station controls how the UE is to behave with respect to performing the improved or normal paging function.

The UE may also be able to receive the indication via the NAS (Non-Access Stratum) layer used for communication with the core network. For instance, a UE that is in the idle or inactive state may not have an active RRC connection to the base station and may thus not be configurable by the base station. In such cases, the UE is still reachable by the core network via the NAS layer.

As still another option, the disabling/enabling indication can be provided in a downlink control information, DCI, message, transmitted by the base station at some point. For instance, DCI of a format 0_1 or 1_1 or 1_0 could be used.

According to an exemplary implementation, in order to assist the proper configuration, the UE can additionally report (e.g. to the base station or the core network) its capability to support the improved paging procedure. For instance, the information can be used by the base station to properly configure UEs that support the new improved paging procedure. As an optional implementation, the UE may additionally indicate the value of the minimum slot time-domain scheduling restriction it is able to support. For instance, a UE can support K0_min values of >2.

The reporting of the capability indication can be done by a MAC Control Element or RRC message.

Although not specified above, the paging function is typically performed on a particular frequency bandwidth part, e.g. the monitoring operation of the downlink control information as well as the reception of the paging message. For instance, as presently defined in 5G NR, a UE in the idle or inactive state may be configured to use a default or initial bandwidth part for its operation. This may change however in the future, such that a UE may have several bandwidth parts active for operation also when in idle or inactive state. On the other hand, a UE in connected mode is configured with several bandwidth parts, even though it may have only one active bandwidth part at a particular time.

Consequently, exemplary embodiments configure the operation of the paging function based on the minimum slot time-domain scheduling restriction irrespective of the currently-active (currently-used) bandwidth part. Correspondingly, the UE applies the improved paging function independently from the bandwidth part.

On the other hand, other exemplary embodiments configure the improved paging function with respect to one or more bandwidth parts, e.g. by specifying the particular frequency bandwidth part in which the improved paging procedure should be applied. In other words, the improved paging function is bandwidth specific. The improved paging procedure would thus be performed between the base station and the UE, when the UE uses one of those indicated bandwidth parts, but the improved paging procedure would not be performed when the UE uses another different bandwidth part.

Another typical assessment in 3GPP relates to the impact of new procedures to legacy UEs, i.e. those UEs that do not support these new procedure. In this case, a new improved paging procedure is proposed which allows the UEs to save power. However, legacy UEs may not benefit from this improved paging procedure because they cannot be configured to take into account the minimum slot time-domain scheduling restriction to allow for power saving.

One possible exemplary implementation would reuse the same paging configuration for legacy UEs also for the improved paging procedure, with the exception of configuring the additional minimum scheduling restriction for performing the paging between the improved base stations and UEs.

On the other hand, in said case, the base station would not have the possibility to differentiate the paging of legacy UEs and of new improved UEs, such that all UEs would be paged in the same manner.

This may not be beneficial, as it may lead to unnecessary paging receptions. Further, the legacy UEs may not be able to identify that the detected PDCCH uses cross-slot scheduling and may thus cause unnecessary power consumption.

Generally, another benefit that could be achieved by the improved paging procedure is that the impact for legacy UEs is minimized. To said end, two solutions are presented in the following to allow distinguishing the different UEs, supporting and not supporting the improved paging procedure presented herein. In both solutions, the operations performed by the UE so as to be able to receive a paging DCI via the downlink control channel are changed when compared to the respective legacy operations to avoid the above disadvantages.

According to a first exemplary solution, a new paging identity is configured for the UE to be used for the improved paging function, e.g. for decoding a paging DCI. This new paging identity is different from the normal paging identity used by legacy UEs when performing the legacy paging procedure and is specific to the use of the minimum slot time-domain scheduling restriction for the improved paging procedure. In some systems, such as the LTE or 5G NR communication systems, the paging identity (e.g. a P-RNTI) is used by the base station to scramble the paging DCI and by the UE to descramble the paging DCI.

Other parameters and aspects of the new improved paging procedure can stay the same as for the normal paging procedure, such as the use of particular search spaces, CORESETs, paging frames, paging occasions, paging channel, DRX, bandwidth parts, etc. (see e.g. also the corresponding background section above regarding paging in 5G NR).

Correspondingly, the base station can differentiate the legacy UEs from improved UEs that are supporting the use of the improved paging procedure, in particular based on the paging identity used for the paging DCI. Thus, for instance, legacy UEs could be paged using a same-slot paging mechanism using the normal paging identity for encoding the paging DCI, whereas improved UEs can be paged using the cross-slot paging mechanism with a minimum time slot scheduling restriction using the new paging identity for encoding the paging DCI.

By using different paging identities, it is facilitated that a legacy UE fails to successfully decode a paging DCI of the improved paging procedure and thus will not try receiving the corresponding paging message. Conversely, a new improved UE will likely fail to successfully decode a paging DCI of the normal paging procedure and thus will not try receiving the corresponding paging message.

Moreover, by distinguishing the two types of UE based on the different paging identity, it is possible to reuse most of the DCI design from the legacy paging, while supporting both same-slot paging and a minimum cross-slot paging. For instance, the two types of UE can use the same search space (and same control resource set) for monitoring the downlink control channel for the paging DCI, such that no additional radio resources need to be reserved or defined for the improved paging procedure.

The new paging identity may be common to all UEs, in a manner corresponding to the normal paging identity (see e.g. P-RNTI of the 5G NR with a 16 bit length and a value that is fixed to 65534). For example, the new P-RNTI can also have 16 bit length and its value can be fixed to a particular value.

On the other hand, the new paging identity could be specific to one UE or a group of UEs, e.g. that support this minimum slot scheduling restriction.

In an exemplary 5G NR specific implementation, the UE could be configured for the normal paging as described in the background section. Furthermore, the new paging identity, e.g. a new RNTI, called e.g. Paging-cross-slot-RNTI (short P-CS-RNTI) could be defined for the UE.

The new paging identity can be configured in different ways between the base station and the UE.

The new paging identity can be defined based on predetermined information that is already available in the UE. For example, the new paging identity adopts a fixed or default value, e.g. may be defined in the USIM (universal subscriber identity module) or specified in the UE based on a 3GPP technical specification. The base station would also know the value of the new paging identity in a similar manner.

According to another way, the new paging identity can be defined by the base station, such that the base station can exert control on the configuration of the new paging identity, such as only configuring it when it deems it necessary.

In said case, one option to provide the new paging identity defined by the base station to the UE is to broadcast same by the base station in its cell using system information. Legacy UEs would not read the new paging identity.

According to another additional or alternative option, the new paging identity can be carried by dedicated messages addressed to the UE, e.g. using the RRC protocol.

According to another additional or alternative option, the UE may also be able receive the new paging identity via the NAS (Non-Access Stratum) layer used for communication with the core network. For instance, a UE that is in the idle or inactive state may not have an active RRC connection to the base station and may thus not be configurable by the base station. In such cases, the UE is still reachable by the core network via the NAS layer.

As still another additional or alternative option, the new paging identity can be provided in a downlink control information, DCI, message, transmitted by the base station at some point prior to performing the improved paging procedure. For instance, DCI of a format 0_1 or 1_1 or 1_0 could be used.

According to a second exemplary solution to distinguish the normal and improved paging procedure, a new search space is configured for the UE to be used for the improved paging function. The new search space is different from the normal search space used by legacy UEs when performing the legacy paging procedure and is specific to the use of the minimum slot time-domain scheduling restriction of the improved paging procedure. In some systems, such as the LTE or 5G NR communication system, the search space defines the radio resource region of a downlink control channel (such as the PDCCH) that a UE is monitoring for receiving the paging DCI.

Correspondingly, the base station can differentiate legacy UEs from improved UEs that are supporting the use of the improved paging procedure, in particular based on the use of a different search space. Thus, for instance, the base station can transmit the paging DCI for legacy UEs in the normal search space of the downlink control channel, while transmitting the paging DCI for improved UEs in the new search space of the downlink control channel.

By using different search spaces, it is facilitated that a legacy UE will not receive a paging DCI (and the corresponding paging message) of the improved paging procedure, and an improved UE will not receive a paging DCI (and the corresponding paging message) of the normal paging procedure. The base station can differentiate the paging procedure for legacy UEs and new improved UEs.

Other parameters and aspects of the new improved paging procedure can stay the same as for the normal paging procedure, such as the use of a paging identity, paging frames, paging occasions, paging channel, DRX, bandwidth parts, etc. (see e.g. also the corresponding background section above regarding paging in 5G NR).

Moreover, by using different search spaces to distinguish the two types of UE, it is possible reuse most of the DCI design from the legacy paging, while supporting both same-slot paging and a minimum cross-slot paging. For instance, the two types of UEs can use the same paging identity for monitoring the downlink control channel for the paging DCI, such that no additional identities need to be defined for the improved paging procedure.

The new search space can be defined in a similar manner as done for the normal search space. For instance, in 5G NR the search space for use in the normal paging is a common search space (see 3GPP TS 38.213 v16.0.0 e.g. sections 10 and 12, TS 38.331 v15.9.0 e.g. DownlinkConfigCommon and *PDCCH-ConfigCommon* with pagingsearchspace, see also other *PDCCH-ConfigSIB1,* . Likewise, the new search space may also be a common search space, but be different in that different time domain resources are defined that allow reducing the blocking with the legacy paging PDCCH. In addition or alternative, the new search space may differ from the normal search space in that different frequency resources are defined.

Moreover, for instance, the new paging search space can be associated with the same control resource set (CORESET) as the normal paging search space (see background explanations, e.g. in relation to Fig. 7). Alternatively, the new paging search space can be associated with a different control resource set (CORESET) than the one with which the normal paging search space is associated.

On the other hand, the new search space could also be specific to a UE or group of UEs that support the new improved paging procedure.

The new paging search space can be configured in different ways between the base station and the UE.

The new search space can be defined based on predetermined information that is already available in the UE. For example, the new paging search space is defined based on fixed or default information, e.g. may be defined in the USIM (universal subscriber identity module) or specified in the UE based on a 3GPP technical specification. The base station would also know the definition of the new paging search space in a similar manner.

According to another way, the new paging search space can be defined by the base station, such that the base station can exert control on the configuration of the new paging search space, e.g. depending on how other search spaces are defined.

In said case, one option to provide suitable information on the new paging search space to the UE is to broadcast same by the base station in its cell using system information. Legacy UEs would not read this information.

According to another additional or alternative option, the new paging search space information can be carried by dedicated messages addressed to the UE, e.g. using the RRC protocol.

According to another additional or alternative option, the UE may also be able receive the new paging search space via the NAS (Non-Access Stratum) layer used for communication with the core network. For instance, a UE that is in the idle or inactive state may not have an active RRC connection to the base station and may thus not be configurable by the base station. In such cases, the UE is still reachable by the core network via the NAS layer.

As still another additional or alternative option, the new paging search space can be provided in a downlink control information, DCI, message, transmitted by the base station at some point prior to performing the improved paging procedure. For instance, DCI of format 0_1 or 1_1 or 1_0 could be used.

Moreover, according to further additional solutions, the improved UE is enabled to check the validity of the scheduled slot considering the minimum slot time-domain scheduling restriction. For instance, the UE can perform a check whether the instructed time slot gap (based on the slot parameter indicated in the paging DCI) complies with the previously defined minimum time slot restriction. The UE determines that the instructed time slot gap is invalid, when it is smaller than the configured minimum time slot restriction. If invalid, the UE e.g. will discard the paging DCI and not try receiving the corresponding paging message. If valid, the UE will proceed accordingly to decode the paging DCI and receive the scheduled paging message.

According to other exemplary solutions, a combination of the above discussed two solutions and their variants can be implemented too. In particular, the improved paging procedure could be performed based on the new paging identity as well as on the new search space.

In the above implementations and variants of the improved paging procedure, it has been assumed that a minimum slot time-domain scheduling restriction is used for the paging performed between the base station and the UE. This scheduling restriction can be implemented in several different ways, as will be explained in detail in the following. In particular, three different concepts, with respective different implementations, will be explained. Each of these concepts can be adopted stand alone, but may alternatively be combined with the previously discussed solutions and respective variants, such as the solutions to properly distinguish between UEs supporting and not supporting the new improved paging procedure, based on the new paging identity and/or the new search space.

As apparent from the following discussion of the three concepts, the time slot scheduled for the paging message is determined differently at the UE and by the base station.

According to a first concept for implementing the minimum slot time-domain scheduling restriction, a different TDRA table is used with the new improved paging procedure than for the normal paging. This new TDRA table is different from other TDRA tables that would be used for the normal paging, e.g. one or more cross-slot scheduling parameters (K0) are provided, respectively indicating a difference of one or more time slots between the paging DCI and the corresponding paging message. Put differently, a K0 value of 0 slots cannot be scheduled based on this new TDRA table, thereby effectively prohibiting a same-slot scheduling for the paging procedure and thus allowing the UE to save power.

The minimum time slot difference among all cross-slot scheduling parameters (K0) of the new TDRA table is then to be considered the minimum slot time-domain scheduling restriction provided by the improved paging procedure. In other words, the TDRA table is defined such that only time slots larger than a minimum slot time-domain scheduling restriction can be selected for scheduling the paging message. Thus, the UE need not expect to be scheduled to receive a paging message in a time slot that is closer than allowed from the minimum scheduling restriction (minimum K0 value in new TDRA table).

According to an exemplary implementation, the new TDRA table can be defined to follow the same structure of the currently-defined TDRA tables, e.g. in the 5G NR communication systems. Correspondingly, the new TDRA table could include different sets of time-domain scheduling parameters such as the cross-slot scheduling parameter K0, the start symbol parameter S, and the Length parameter L, and optionally also further parameters such as one or both of the dmrs-TypeA-Position and PDSCH mapping type (see background section). The new TDRA table may thus also include 16 different sets of these parameters, as in some legacy TDRA table (e.g. 16 rows).

In this manner, the improved paging procedure may reuse parameters and communication mechanism already established for the normal paging procedure, such as using a 4-bit TDRA row index indication in the DCI.

For example, an exemplary new TDRA table could be as follows:

| **Row index** | ***dmrs-TypeA-Position*** | **PDSCH mapping type** | ***K₀*** | ***S*** | ***L*** |
|---|---|---|---|---|---|
| 1 | 2 | Type A | 1 | 2 | 12 |
| | 3 | Type A | 1 | 3 | 11 |
| 2 | 2 | Type A | 1 | 2 | 10 |
| | 3 | Type A | 1 | 3 | 9 |
| 3 | 2 | Type A | 1 | 2 | 9 |
| | 3 | Type A | 2 | 3 | 8 |
| 4 | 2 | Type A | 2 | 2 | 7 |
| | 3 | Type A | 2 | 3 | 6 |
| 5 | 2 | Type A | 2 | 2 | 5 |
| | 3 | Type A | 2 | 3 | 4 |
| 6 | 2 | Type B | 3 | 9 | 4 |
| | 3 | Type B | 3 | 10 | 4 |
| 7 | 2 | Type B | 3 | 4 | 4 |
| | 3 | Type B | 3 | 6 | 4 |
| 8 | 2,3 | Type B | 3 | 5 | 7 |
| 9 | 2,3 | Type B | 4 | 5 | 2 |
| 10 | 2,3 | Type B | 4 | 9 | 2 |
| 11 | 2,3 | Type B | 4 | 12 | 2 |
| 12 | 2,3 | Type A | 4 | 1 | 13 |
| 13 | 2,3 | Type A | 5 | 1 | 6 |
| 14 | 2,3 | Type A | 5 | 2 | 4 |
| 15 | 2,3 | Type B | 5 | 4 | 7 |
| 16 | 2,3 | Type B | 5 | 8 | 4 |

As apparent therefrom, the minimum K0 value that can be scheduled by the base station when using this TDRA table is K0=1. Consequently, the minimum slot time-domain scheduling restriction provided by this exemplary improved paging procedure would be 1 time slot.

By using a new TDRA table, the impact on legacy UEs can minimized, because the legacy UEs could be paged using the old TDRA table(s) and the new UEs performing the improved paging procedure can be paged based on the new different TDRA table.

According to another different exemplary implementation, the new TDRA table can be structured differently from currently-defined TDRA tables. It may indicate only K0 and one or more of the remaining parameters, such as S and L, and possibly dmrs-TypeA-Position and PDSCH mapping type. Furthermore, there may not be a need that the new TDRA table indicates up to 16 different sets of parameters, but it may suffice to indicate less or more sets, e.g. 4 different sets of parameters, which could be differentiated by a 2-bit index. For instance, such a limited TDRA table could be defined as follows:

| **Row index** | ***dmrs-TypeA-Position*** | **PDSCH mapping type** | ***K₀*** | ***S*** | ***L*** |
|---|---|---|---|---|---|
| 1 | 2 | Type A | 1 | 2 | 12 |
| | 3 | Type A | 2 | 3 | 11 |
| 2 | 2 | Type A | 1 | 2 | 10 |
| | 3 | Type A | 2 | 3 | 9 |
| 3 | 2 | Type A | 1 | 2 | 9 |
| | 3 | Type A | 3 | 3 | 8 |
| 4 | 2 | Type A | 4 | 2 | 7 |
| | 3 | Type A | 5 | 3 | 6 |

Correspondingly, the UE would select the new TDRA table when performing the new paging procedure, and would select the normal TDRA table when performing the normal paging procedure.

There are different manners on how the content of the new TDRA table can be defined between the base station and the UE.

The new TDRA table can be defined based on predetermined information that is already available in the UE. For example, the new TDRA table is fixed or defined as a default, e.g. in the USIM (universal subscriber identity module) or specified in the UE based on a 3GPP technical specification. The base station would also use the same TDRA table in a corresponding manner.

In an exemplary 5G NR implementation, in addition to the default tables A, B and C already defined in the 3GPP technical specification, a new default table D (e.g. with the above content) could be defined for the PDSCH time domain resource allocation (see 3GPP TS 38.214 Table 5.1.2.1.1-1 "Applicable PDSCH time domain resource allocation for DCI formats 1_0 and 1_1").

According to another way, the new TDRA table could be defined by the base station, such that the base station can exert control on the possible paging message scheduling using the new TDRA table.

In said case, one option to provide the new TDRA table defined by the base station to the UE is to broadcast same by the base station in its cell using system information.

According to another additional or alternative option, the new TDRA table can be carried by dedicated messages addressed to the UE, e.g. using the RRC protocol.

According to another additional or alternative option, the UE may also be able receive the new TDRA Table via the NAS (Non-Access Stratum) layer used for communication with the core network. For instance, a UE that is in the idle or inactive state may not have an active RRC connection to the base station and may thus not be configurable by the base station. In such cases, the UE is still reachable by the core network via the NAS layer.

According to another exemplary solution it would be possible to reuse another TDRA table defined for another purpose, such as a dedicated TDRA table that was configured when in RRC CONNECTED state.

According to a second concept for implementing the minimum slot time-domain scheduling restriction, instead of using a new TDRA table as according to the above described first concept, a legacy TDRA table is used but in combination with a suitable minimum slot time-domain scheduling restriction. In more detail, the improved paging procedure may reuse the same TDRA table as used for the normal paging procedure. However, the UE additionally considers a separate minimum slot time-domain scheduling parameter (e.g. K0_min) for the operation of the improved paging procedure, such that only part of the set of time-domain scheduling parameters encoded by the TDRA table are valid, namely those that are associated with a slot indication (K0) that is equal to or larger than the minimum scheduling restriction. Therefore, entries of the TDRA table that are associated with a smaller slot time-domain scheduling parameter that is smaller than defined by the minimum slot time-domain scheduling parameter (K0_min) is not needed to be expected (or simply considered invalid) by the UE. For instance, a legacy TDRA table for use with the normal paging procedure can be assumed, such as the RRC-configured TDRA table provided in the background section for PDSCH (see section *"Time-domain scheduling in 5G NR"*), which allows both same-slot and cross-slot scheduling. When performing the improved paging procedure, the UE will use such a legacy TDRA table in combination with the K0_min value, such that certain sets of time-domain scheduling parameters will not be expected by the UE for the scheduling of the paging message via the paging DCI.

For instance, when exemplary assuming a K0_min value of 1 time slot, all sets of time-domain scheduling parameters that would indicate a K0 value of 0 would not be expected by the UE. This is illustrated in the following TDRA table in which those sets (here rows) are filtered out (stroked out).

| **Row index** | ***dmrs-TypeA-Position*** | **PDSCH mapping type** | ***K₀*** | ***S*** | ***L*** |
|---|---|---|---|---|---|
| 3 | 2 | Type A | 0 | 2 | 9 |
| | 3 | Type A | 1 | 3 | 8 |
| 4 | 2 | Type A | 1 | 2 | 7 |
| | 3 | Type A | 1 | 3 | 6 |
| 5 | 2 | Type A | 1 | 2 | 5 |
| | 3 | Type A | 1 | 3 | 4 |
| 6 | 2 | Type B | 2 | 9 | 4 |
| | 3 | Type B | 2 | 10 | 4 |
| 7 | 2 | Type B | 2 | 4 | 4 |
| | 3 | Type B | 2 | 6 | 4 |
| 8 | 2,3 | Type B | 2 | 5 | 7 |
| 9 | 2,3 | Type B | 3 | 5 | 2 |
| 10 | 2,3 | Type B | 3 | 9 | 2 |
| 11 | 2,3 | Type B | 3 | 12 | 2 |
| 12 | 2,3 | Type A | 3 | 1 | 13 |
| 13 | 2,3 | Type A | 4 | 1 | 6 |
| 14 | 2,3 | Type A | 4 | 2 | 4 |
| 15 | 2,3 | Type B | 4 | 4 | 7 |
| 16 | 2,3 | Type B | 4 | 8 | 4 |

One benefit over the first concept, is that it is avoided that a new TDRA table is defined for the improved paging procedure, which entails less impact on the 3GPP specification.

According to this second concept, the UE is to be provided with the minimum slot time-domain scheduling parameter (K0_min). There are different manners on how the K0_min parameter can be defined between the base station and the UE.

The K0_min parameter can be defined based on predetermined information that is already available in the UE. For example, the K0_min parameter is fixed or defined as a default, e.g. in the USIM (universal subscriber identity module) or specified in the UE based on a 3GPP technical specification. The base station would also use the same K0_min parameter in a corresponding manner.

According to another way, the K0_min parameter could be defined by the base station, such that the base station can exert control on the possible scheduling restriction to be applied to the new improved paging procedure.

In said case, one option to provide the K0_min parameter defined by the base station to the UE is to broadcast same by the base station in its cell using system information.

According to another additional or alternative option, the K0_min parameter can be carried by dedicated messages addressed to the UE, e.g. using the RRC protocol.

According to another additional or alternative option, the UE may also be able receive the K0_min parameter via the NAS (Non-Access Stratum) layer used for communication with the core network. For instance, a UE that is in the idle or inactive state may not have an active RRC connection to the base station and may thus not be configurable by the base station. In such cases, the UE is still reachable by the core network via the NAS layer.

As still another additional or alternative option, the K0_min parameter can be provided in a downlink control information, DCI, message, transmitted by the base station at some point prior to performing the improved paging procedure. In one example, the paging DCI could carry the K0_min parameter, which could be then applied by the UE for the future operation of the improved paging procedure until superseded by another K0_min value (possibly in another paging DCI).

For instance, the same K0_min parameter already configured by the base station for the normal PDSCH scheduling could be used also as the slot scheduling restriction for paging. According to an exemplary 5G NR implementation, the K0_min parameter could thus be indicated using a 1-bit field in a DCI format combined with previously configured one or two values for the K0_min respectively selected by the 1-bit DCI field (see e.g. implementation presented in the background, in section titled "Power saving using Cross-slot scheduling*"*).

A third concept for implementing the minimum slot time-domain scheduling restriction is similar to the second concept in that it does not need the definition of a new TDRA table but rather relies on a legacy TDRA table and the use of a suitable minimum slot time-domain scheduling parameter (K0_min value). However, rather than filtering the legacy TDRA table based on the K0_min value as done for the second concept (see above), the K0_min value is used so as to reinterpret the legacy TDRA table by substituting all the K0 values with the K0_min value. Thus, effectively a TDRA table is used for the improved paging procedure that is different from the TDRA table used for the legacy paging procedure.

In more detail, a legacy TDRA table for use with the normal paging procedure can be assumed, such as the RRC-configured TDRA table provided in the background section for PDSCH (see section *"Time-domain scheduling in 5G NR"*)*,* which allows both same-slot and cross-slot scheduling. But also other legacy TDRA tables could be reused, such as the default TDRA tables A, B, C defined in the corresponding 3GPP specification for 5G NR. When performing the improved paging procedure, the UE will use such a legacy TDRA table in combination with the K0_min value, such that in each set of time-domain scheduling parameters the K0 value is replaced by the K0_min value.

For instance, when exemplary assuming a K0_min value of 1 time slot, and due to the reinterpretation of the TDRA table, all sets of time-domain scheduling parameters would indicate a K0 value of 1. This is illustrated in the following TDRA table in which the K0 value reinterpretation is illustrated as marked-up.

| **Row index** | ***dmrs-TypeA-Position*** | **PDSCH mapping type** | ***K₀*** | ***S*** | ***L*** |
|---|---|---|---|---|---|
| 1 | 2 | Type A | 1 | 2 | 12 |
| | 3 | Type A | 1 | 3 | 11 |
| 2 | 2 | Type A | 1 | 2 | 10 |
| | 3 | Type A | 1 | 3 | 9 |
| 3 | 2 | Type A | 1 | 2 | 9 |
| | 3 | Type A | 1 | 3 | 8 |
| 4 | 2 | Type A | 1 | 2 | 7 |
| | 3 | Type A | 1 | 3 | 6 |
| 5 | 2 | Type A | 1 | 2 | 5 |
| | 3 | Type A | 1 | 3 | 4 |
| 6 | 2 | Type B | 1 | 9 | 4 |
| | 3 | Type B | 1 | 10 | 4 |
| 7 | 2 | Type B | 1 | 4 | 4 |
| | 3 | Type B | 1 | 6 | 4 |
| 8 | 2,3 | Type B | 1 | 5 | 7 |
| 9 | 2,3 | Type B | 1 | 5 | 2 |
| 10 | 2,3 | Type B | 1 | 9 | 2 |
| 11 | 2,3 | Type B | 1 | 12 | 2 |
| 12 | 2,3 | Type A | 1 | 1 | 13 |
| 13 | 2,3 | Type A | 41 | 1 | 6 |
| 14 | 2,3 | Type A | 41 | 2 | 4 |
| 15 | 2,3 | Type B | 41 | 4 | 7 |
| 16 | 2,3 | Type B | 41 | 8 | 4 |

Again, a benefit of this third concept is that definition of a new TDRA table is avoided for the improved paging procedure, which entails less impact on the 3GPP specification.

In the same manner as with the second concept, the UE is to be provided with the minimum slot time-domain scheduling parameter (K0_min) and there are different manners on how the K0_min parameter can be defined between the base station and the UE. The same solutions as for the second concept (e.g. default, system information, RRC, NAS, DCI) can be used for the third concept in order to define the K0_min parameter. In order to avoid unnecessary repetition, reference is made to the above explanations in said respect made for the second concept.

Numerous variants and implementations of the improved paging procedure have been described. Some of these have been described separately from one another in order to be facilitate the understanding of the underlying mechanisms and benefits of the respective variant or implementation. However, it is equally possible to combine two or more of the variants and implementations of the improved paging procedure together to form new variants and implementations of the improved paging procedure. Without being exhaustive, a few of these implementations that can be combined are listed in the following. For instance, the solutions (and variants thereof) that rely on a new paging identity can be combined with the solutions (and variants thereof) that rely on a new search space. Each of these solutions (new paging identity, new search space, or combination of both) can then be respectively combined to use each of the three described concepts for how to determine the time slot and thereby implement the minimum slot scheduling restriction, e.g. the new TDRA table, the use of a legacy TDRA table but filtered based on the K0_min parameter, or the use of a legacy TDRA table that is reinterpreted by substituting all K0 entries with the K0_min parameter.

### Further Aspects

According to a first aspect, a user equipment, UE, is provided comprising a receiver which receives configuration information to configure the UE to perform a paging function using a minimum slot time-domain scheduling restriction. The minimum slot time-domain scheduling restriction indicates a minimum amount of time slots between a received paging DCI and a corresponding paging message transmitted in the downlink as indicated by the received paging DCI. The receiver monitors a downlink control channel for a paging DCI transmitted from a base station that controls a radio cell in which the user equipment is located. The paging DCI indicates a slot time-domain scheduling parameter. A processor of the UE determines a time slot at which the corresponding paging message is transmitted by the base station, based on the indicated slot time-domain scheduling parameter. The receiver receives the corresponding paging message from the base station at the determined time slot.

According to a second aspect provided in addition to the first aspect, configuring the UE to use the minimum slot time-domain scheduling restriction for the paging function includes configuring a first paging identity that is specific to using the minimum slot time-domain scheduling restriction and is usable to decode a paging DCI. Further, the first paging identity is different from a second paging identity that is not specific to using a minimum slot time-domain scheduling restriction, the second paging identity being used for the paging function in case the minimum slot time-domain scheduling restriction is not used for the paging function.

According to a third aspect provided in addition to the first or second aspect, the processor determines a value of the first paging identity based on one or more of the following:
- predetermined information available in the UE,
- system information received from the base station,
- a message addressed to the UE and received from the base station, optionally wherein the message is a message of the Radio Resource Control, RRC, protocol or wherein the message is a message of the Non-Access Stratum, NAS, layer and originates from the core network , and
- a downlink control information message, received before the paging DCI.

According to a fourth aspect provided in addition to one of the first to third aspects, the paging function is further configured to be performed based on one or more of the following, both in case the minimum slot time-domain scheduling restriction is used or not used:
- a same search space,
- a same control resource set,
- paging frames and paging occasions
- paging channel,
- bandwidth part,
- DRX.

According to a fifth aspect, provided in addition to one of the first to fourth aspects, configuring the UE to use the minimum slot time-domain scheduling restriction for the paging function includes configuring a first search space that is specific to using the minimum slot time-domain scheduling restriction, the first search space indicating a region of the downlink control channel in which the UE is to monitor for a paging DCI. The first search space is different from a second search space that is not specific to using a minimum slot time-domain scheduling restriction. The second search space indicates a region of the downlink control channel in which the UE is to monitor for a paging DCI in case the UE is not configured to use the minimum slot time-domain scheduling restriction for the paging function. In an optional implementation, the first search space and the second search space are associated with a same control resource set, or the first search space and the second search space are associated with different control resource sets.

According to a sixth aspect, provided in addition to the fifth aspect, the processor determines information on the first search space based on one or more of the following:
- predetermined information available in the UE,
- system information received from the base station,
- a message addressed to the UE and received from the base station, optionally wherein the message is a message of the Radio Resource Control, RRC, protocol or wherein the message is a message of the Non-Access Stratum, NAS, layer and originates from the core network.

According to a seventh aspect provided in addition to one of the fifth to sixth aspects, the paging function is further configured to be performed based on one or more of the following, both in case the minimum slot time-domain scheduling restriction is used or not used:
- a same paging identity,
- paging frames and paging occasions
- paging channel,
- bandwidth part,
- DRX.

According to an eighth aspect provided in addition to one of the first to seventh aspects, the processor, when determining the time slot at which the corresponding paging message is transmitted by the base station, performs the following:
- determining a first TDRA table when the minimum slot time-domain scheduling restriction is used,
- determining one or more time-domain scheduling related parameters, including the slot time-domain scheduling parameter, based on the determined first TDRA table and information indicated by the paging DCI.

Further, the first TDRA table indicates a plurality of slot time-domain scheduling parameters, wherein each of the plurality of slot time-domain scheduling parameters indicates a difference of one or more time slots between a received paging DCI and a corresponding paging message.

In an optional implementation the processor, when determining the time slot at which the corresponding paging message is transmitted by the base station, performs the following:
- determining a second TDRA table when the minimum slot time-domain scheduling restriction is not used for the paging procedure.

According to a ninth aspect provided in addition to the eighth aspect, the processor determines content of the first TDRA table based on one or more of the following:
- predetermined information available in the UE,
- system information received from the base station,
- a message addressed to the UE and received from the base station, optionally wherein the message is a message of the Radio Resource Control, RRC, protocol or wherein the message is a message of the Non-Access Stratum, NAS, layer and originates from the core network.

According to a tenth aspect provided in addition to one of the first to seventh aspects, the processor, when determining the time slot at which the corresponding paging message is transmitted by the base station, performs the following:
- determining one or more time-domain scheduling parameters, including the slot time-domain scheduling parameter, based on a time-domain resource allocation, TDRA, table, and information indicated by the paging DCI, wherein the same TDRA table is usable both in case of using or not using the minimum slot time-domain scheduling restriction for the paging function.

The TDRA table includes a plurality of slot time-domain scheduling parameters, and only those slot time-domain scheduling parameters are considered valid that are the same or larger than the minimum slot time-domain scheduling parameter.

According to an eleventh aspect, provided in addition to the tenth aspect, the processor determines the value of the minimum slot time-domain scheduling parameter based on one or more of the following:
- predetermined information available in the UE,
- system information received from the base station,
- a message addressed to the UE and received from the base station, optionally wherein the message is a message of the Radio Resource Control, RRC, protocol or wherein the message is a message of the Non-Access Stratum, NAS, layer and originates from the core network,
- a downlink control information message, optionally the paging DCI or another DCI received before the paging DCI.

According to a twelfth aspect, provided in addition to one of the first to seventh aspects, the processor, when determining the time slot at which the corresponding paging message is transmitted by the base station, performs the following:
- determining a new first TDRA table, based on a second TDRA table, that is usable in case the minimum slot time-domain scheduling restriction is not to be used for the paging function, and replacing a plurality of cross-slot time-domain scheduling parameters of the second TDRA table with a minimum slot time-domain scheduling parameter,
- determining one or more time-domain scheduling parameters, including the slot time-domain scheduling parameter, based on the first TDRA table and information indicated by the paging DCI.

According to a thirteenth aspect, provided in addition to the twelfth aspect, the processor, when in operation, determines the value of the minimum slot time-domain scheduling parameter based on one or more of the following:
- predetermined information available in the UE,
- system information received from the base station,
- a message addressed to the UE and received from the base station, optionally wherein the message is a message of the Radio Resource Control, RRC, protocol or wherein the message is a message of the Non-Access Stratum, NAS, layer and originates from the core network,
- a downlink control information message, optionally the paging DCI or another DCI received before the paging DCI.

According to a fourteenth aspect, provided in addition to one of the first to thirteenth aspects, the processor determines whether or not the UE supports performing the paging function using the minimum slot time-domain scheduling restriction. When determining that the UE supports performing the paging function using the minimum slot time-domain scheduling restriction, a transmitter transmits to the base station a capability indication, indicating that the UE supports performing the paging function using the minimum slot time-domain scheduling restriction and optionally indicating the value of the supported minimum slot time-domain scheduling restriction.

According to a fifteenth aspect, provided in addition to one of the first to fourteenth aspects, the UE is configured with a plurality of frequency bandwidth parts within a system frequency bandwidth of the radio cell, and wherein configuring the UE to use the minimum slot time-domain scheduling restriction includes specifying one or more out of the plurality of frequency bandwidth parts.

According to a sixteenth aspect, provided in addition to one of the first to fifteenth aspects, when the UE receives a disabling indication from the base station, the UE determines to perform the paging function not using the minimum slot time-domain scheduling restriction. In an optional implementation, the disabling indication is received based on one or more of the following:
- system information received from the base station,
- a message addressed to the UE and received from the base station, optionally wherein the message is a message of the Radio Resource Control, RRC, protocol or wherein the message is a message of the Non-Access Stratum, NAS, layer and originates from the core network,
- a downlink control information message.

According to a seventeenth aspect, provided in addition to one of the first to sixteenth aspects, the UE operates based on the minimum time-domain scheduling restriction, such that a slot time-domain scheduling parameter is not expected to be smaller than the minimum slot time-domain scheduling restriction. In optional implementations, the processor performs one or more of the following functions based on the minimum slot time-domain scheduling restriction:
- buffering data received from the base station in time slots,
- decoding of data received from the base station in time slots,
- decoding of a paging DCI,
- power-saving function.

According to an eighteenth aspect, provided in addition to one of the first to seventeenth aspects, the processor, when determining the time slot at which the paging message is to be transmitted by the base station, uses a time-domain resource-allocation table, TDRA, table and information from the paging DCI. The TDRA table indicates a plurality of sets of time-domain scheduling parameters including one or more of the following:
- a slot time-domain scheduling parameter, a difference of one or more time slots between a received DCI and a corresponding downlink transmission,
- the starting symbol in a time slot of the downlink transmission, and
- the length of the downlink transmission in terms of symbols.

One of the plurality of sets of time-domain scheduling parameters is indicated by the information in the paging DCI.

According to a nineteenth aspect, provided in addition to one of the first to eighteenth aspects, the minimum amount of time slots indicated by the minimum slot time-domain scheduling restriction is at least one time slot, and/or
wherein the user equipment is in an inactive state or an idle state, out of the idle state, the inactivate state and a connected state the user equipment can be in.

According to a twentieth aspect, a method is provided comprising the following steps performed by a user equipment, UE:
receiving configuration information to configure the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI,
monitoring a downlink control channel for a paging DCI transmitted from a base station that controls a radio cell in which the user equipment is located, wherein the paging DCI indicates a slot time-domain scheduling parameter,
determining a time slot at which the corresponding paging message is transmitted by the base station, based on the indicated slot time-domain scheduling parameter,
receiving the corresponding paging message from the base station at the determined time slot.

According to a 21-st aspect, a radio base station is provided comprising the following. A transmitter transmits configuration information to a user equipment located in a radio cell controlled by the base station, wherein the configuration information configures the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI. A processor determines a time slot at which the corresponding paging message is to be transmitted to the UE based on the minimum slot time-domain scheduling restriction and determines a slot time-domain scheduling parameter corresponding to the determined time slot. The transmitter transmits a paging DCI via a downlink control channel to the UE, wherein the paging DCI indicates the determined slot time-domain scheduling parameter. The transmitter transmits the corresponding paging message to the UE at the determined time slot.

According to a 22-nd aspect, a method is provided comprising the following steps performed by a base station:
transmitting configuration information to a user equipment located in a radio cell controlled by the base station, wherein the configuration information configures the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI,
determining a time slot at which the corresponding paging message is to be transmitted to the UE based on the minimum slot time-domain scheduling restriction and determining a slot time-domain scheduling parameter corresponding to the determined time slot,
transmitting a paging DCI via a downlink control channel to the UE, wherein the paging DCI indicates the determined slot time-domain scheduling parameter,
transmitting the corresponding paging message to the UE at the determined time slot.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation, receives configuration information to configure the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI,
wherein the receiver, when in operation, monitors a downlink control channel for a paging DCI transmitted from a base station that controls a radio cell in which the user equipment is located, wherein the paging DCI indicates a slot time-domain scheduling parameter,
a processor, which in operation, determines a time slot at which the corresponding paging message is transmitted by the base station, based on the indicated slot time-domain scheduling parameter,
the receiver, which in operation, receives the corresponding paging message from the base station at the determined time slot.

2. The user equipment according to claim 1, wherein configuring the UE to use the minimum slot time-domain scheduling restriction for the paging function includes configuring a first paging identity that is specific to using the minimum slot time-domain scheduling restriction and is usable to decode a paging DCI,
wherein the first paging identity is different from a second paging identity that is not specific to using a minimum slot time-domain scheduling restriction, the second paging identity being used for the paging function in case the minimum slot time-domain scheduling restriction is not used for the paging function.

3. The user equipment according to claim 1 or 2, wherein the processor, when in operation, determines a value of the first paging identity based on one or more of the following:
∘ predetermined information available in the UE,
∘ system information received from the base station,
∘ a message addressed to the UE and received from the base station, optionally wherein the message is a message of the Radio Resource Control, RRC, protocol or wherein the message is a message of the Non-Access Stratum, NAS, layer and originates from the core network, and
∘ a downlink control information message, received before the paging DCI.

4. The user equipment according to one of claims 1 to 3, wherein configuring the UE to use the minimum slot time-domain scheduling restriction for the paging function includes configuring a first search space that is specific to using the minimum slot time-domain scheduling restriction, the first search space indicating a region of the downlink control channel in which the UE is to monitor for a paging DCI,
wherein the first search space is different from a second search space that is not specific to using a minimum slot time-domain scheduling restriction, wherein the second search space indicates a region of the downlink control channel in which the UE is to monitor for a paging DCI in case the UE is not configured to use the minimum slot time-domain scheduling restriction for the paging function,
optionally wherein the first search space and the second search space are associated with a same control resource set, or wherein the first search space and the second search space are associated with different control resource sets.

5. The user equipment according to claim 4, wherein the processor, when in operation, determines information on the first search space based on one or more of the following:
∘ predetermined information available in the UE,
∘ system information received from the base station,
∘ a message addressed to the UE and received from the base station, optionally wherein the message is a message of the Radio Resource Control, RRC, protocol or wherein the message is a message of the Non-Access Stratum, NAS, layer and originates from the core network.

6. The user equipment according to one of claims 1 to 5, wherein the processor, when determining the time slot at which the corresponding paging message is transmitted by the base station, performs the following:
∘ determining a first TDRA table when the minimum slot time-domain scheduling restriction is used,
∘ determining one or more time-domain scheduling related parameters, including the slot time-domain scheduling parameter, based on the determined first TDRA table and information indicated by the paging DCI, and
wherein the first TDRA table indicates a plurality of slot time-domain scheduling parameters, wherein each of the plurality of slot time-domain scheduling parameters indicates a difference of one or more time slots between a received paging DCI and a corresponding paging message,
optionally wherein the processor, when determining the time slot at which the corresponding paging message is transmitted by the base station, performs the following:
• determining a second TDRA table when the minimum slot time-domain scheduling restriction is not used for the paging procedure.

7. The user equipment according to claim 6, wherein the processor, when in operation, determines content of the first TDRA table based on one or more of the following:
∘ predetermined information available in the UE,
∘ system information received from the base station,
∘ a message addressed to the UE and received from the base station, optionally wherein the message is a message of the Radio Resource Control, RRC, protocol or wherein the message is a message of the Non-Access Stratum, NAS, layer and originates from the core network.

8. The user equipment according to one of claims 1 to 5, wherein the processor, when determining the time slot at which the corresponding paging message is transmitted by the base station, performs the following:
∘ determining one or more time-domain scheduling parameters, including the slot time-domain scheduling parameter, based on a time-domain resource allocation, TDRA, table, and information indicated by the paging DCI, wherein the same TDRA table is usable both in case of using or not using the minimum slot time-domain scheduling restriction for the paging function,
wherein the TDRA table includes a plurality of slot time-domain scheduling parameters, and only those slot time-domain scheduling parameters are considered valid that are the same or larger than the minimum slot time-domain scheduling parameter.

9. The user equipment according to claim 8, wherein the processor, when in operation, determines the value of the minimum slot time-domain scheduling parameter based on one or more of the following:
∘ predetermined information available in the UE,
∘ system information received from the base station,
∘ a message addressed to the UE and received from the base station, optionally wherein the message is a message of the Radio Resource Control, RRC, protocol or wherein the message is a message of the Non-Access Stratum, NAS, layer and originates from the core network,
∘ a downlink control information message, optionally the paging DCI or another DCI received before the paging DCI.

10. The user equipment according to one of claims 1 to 5, wherein the processor, when determining the time slot at which the corresponding paging message is transmitted by the base station, performs the following:
∘ determining a new first TDRA table, based on a second TDRA table, that is usable in case the minimum slot time-domain scheduling restriction is not to be used for the paging function, and replacing a plurality of cross-slot time-domain scheduling parameters of the second TDRA table with a minimum slot time-domain scheduling parameter,
∘ determining one or more time-domain scheduling parameters, including the slot time-domain scheduling parameter, based on the first TDRA table and information indicated by the paging DCI.

11. The user equipment according to one of claims 1 to 10, wherein the UE operates based on the minimum time-domain scheduling restriction, such that a slot time-domain scheduling parameter is not expected to be smaller than the minimum slot time-domain scheduling restriction,
optionally wherein the processor, when in operation, performs one or more of the following functions based on the minimum slot time-domain scheduling restriction:
∘ buffering data received from the base station in time slots,
∘ decoding of data received from the base station in time slots,
∘ decoding of a paging DCI,
∘ power-saving function.

12. The user equipment according to one of claims 1 to 11, wherein the minimum amount of time slots indicated by the minimum slot time-domain scheduling restriction is at least one time slot, and/or
wherein the user equipment is in an inactive state or an idle state, out of the idle state, the inactivate state and a connected state the user equipment can be in.

13. A method comprising the following steps performed by a user equipment, UE:
receiving configuration information to configure the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI,
monitoring a downlink control channel for a paging DCI transmitted from a base station that controls a radio cell in which the user equipment is located, wherein the paging DCI indicates a slot time-domain scheduling parameter,
determining a time slot at which the corresponding paging message is transmitted by the base station, based on the indicated slot time-domain scheduling parameter,
receiving the corresponding paging message from the base station at the determined time slot.

14. A radio base station comprising:
a transmitter, which in operation, transmits configuration information to a user equipment located in a radio cell controlled by the base station, wherein the configuration information configures the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI,
a processor, which in operation, determines a time slot at which the corresponding paging message is to be transmitted to the UE based on the minimum slot time-domain scheduling restriction and determines a slot time-domain scheduling parameter corresponding to the determined time slot,
the transmitter, which in operation, transmits a paging DCI via a downlink control channel to the UE, wherein the paging DCI indicates the determined slot time-domain scheduling parameter,
the transmitter, which in operation, transmits the corresponding paging message to the UE at the determined time slot.

15. A method comprising the following steps performed by a base station:
transmitting configuration information to a user equipment located in a radio cell controlled by the base station, wherein the configuration information configures the UE to perform a paging function using a minimum slot time-domain scheduling restriction, wherein the minimum slot time-domain scheduling restriction indicates a minimum amount of time slots between a received paging downlink control information, DCI, and a corresponding paging message transmitted in the downlink as indicated by the received paging DCI,
determining a time slot at which the corresponding paging message is to be transmitted to the UE based on the minimum slot time-domain scheduling restriction and determining a slot time-domain scheduling parameter corresponding to the determined time slot,
transmitting a paging DCI via a downlink control channel to the UE, wherein the paging DCI indicates the determined slot time-domain scheduling parameter,
transmitting the corresponding paging message to the UE at the determined time slot.
